# EUROPEAN PATENT APPLICATION

(11) **EP 0 785 696 A2**
(43) Date of publication of application: **23.07.1997**
(21) Application number: 97100369.4
(22) Date of filing: 10.01.1997
(51) Int. Cl.: H04Q 7/38, H04Q 7/24

(54) **Mobile telecommunication system and method for setting telecommunication circuit therefor**

(30) Priority: 22.01.1996 JP 8040/96; 25.01.1996 JP 10662/96
(71) Applicant: HITACHI, LTD., Chiyoda-ku, Tokyo 100 (JP)
(72) Inventor: Kusaki, Tsutomu, Naka-ku, Yokohama-shi (JP); Tanigawa, Koichi, Totsuka-ku, Yokohama-shi (JP); Namura, Mikiya, Totsuka-ku, Yokohama-shi (JP); Hayashi, Masato, Miyamae-ku, Kawasaki-shi (JP)
(74) Representative: von Hellfeld, Axel, Dr. Dipl.-Phys.

(57) **Abstract**

A mobile telecommunication system of a multi-layer cell structure includes that when the personal station (PS) 100 carries out a circuit connection, information such as type of call and move speed of the personal station, etc. is transmitted to the cell selector 160, an optimum type of cell is selected as a connection destination of the personal station based on a combination of these information in the cell selection table 200 within the cell selector, the selected type of cell is transmitted to the personal station (PS) 100, so that a circuit connection processing with the radio base station (BS) which structures the selected cell is started.

## Description

### BACKGROUND OF THE INVENTION

The present invention relates to a mobile telecommunication system for setting a telecommunication circuit by selecting a base station (BS) which covers a radio zone of a suitable size for each call in a multi-layer system in which radio zones of different sizes are structured in layers, and a method for setting a telecommunication circuit therefor.

A mobile telecommunication system of a generally known single layer type has various problems, such as the problems of variations in the quality of radio circuits which occur along with the move of personal stations, unbalanced allocation of service areas which occurs by the allocation of base stations (BS) corresponding to the unbalanced distribution of density of personal stations and unbalanced traffic density, and an increase in the number of BS-to-BS hand-over processing generated by the move of personal stations during telecommunications.

As conventional methods for solving the above problems, there are available inventions relating to a mobile telecommunication system in which one multi-layer is structured by an integration of a plurality of different cell systems (such as, for example, the Japanese Patent Laid-open Publication Nos. JP-A-6-224828, JP-A-3-73625 and JP-A-5-252098).

In the Japanese Patent Laid-open Publication No. JP-A-6-224828, "Micro/Macro-cell Integrated Mobile Telecommunication System", there is disclosed a cell selecting method for estimating a move speed of personal stations based on a variation of a wave level received by the personal stations so that a constant quality level of the radio is maintained from the estimated move speed of the personal stations. Further, in the Japanese Patent Laid-open Publication No. JP-A-3-73625, "Mobile Telecommunication System", there is disclosed a method of improving the efficiency of using the circuits by structuring the system such that higher-layer cells of large-cell size cover lower-layer cells so that the higher-layer cells cover the ranges which can not be covered by the lower-layer cells and, at the same time, a paging of a personal station is carried out sequentially starting from the lower-cells for a circuit connection. Further, in the Japanese Patent Laid-open Publication No. JP-A-5-252098, "Mobile Telecommunication System having a Hierarchical Structure", there is proposed a method of reducing the number of hand-over processing by having such an arrangement that when a predetermined number of hand-over is exceeded during a telecommunication by utilizing a base station (BS) of a lower-layer cell, the circuit is changed over to a base station (BS) of a higher-layer cell.

### SUMMARY OF THE INVENTION

In the future field of mobile telecommunication, it is expected that there will be a higher growth in the demand of image transmission and data transmission, not only in the demand of voice transmission, against the conventional pattern of high demand of voice transmission.

According to the above-described prior-art techniques, however, telecommunication is carried out without making any discrimination to the calls of voice telecommunication, image telecommunication and data telecommunication of which transmission speeds and holding times are quite different from each other. Accordingly, there is a first problem in that the cells are changed over based on the same cell selection standards for both voice telecommunication and data telecommunication despite the fact that telecommunication qualities required for these telecommunications are different.

Taking an example of the first problem, for a personal station which is carrying out a voice telecommunication while making a high-speed move, the circuit is changed over to a higher-layer cell of better telecommunication quality due to the only fact that the personal station is making a high-speed move despite the fact that the telecommunication quality required for the voice telecommunication is being sufficiently maintained. This in turn interferes a securing of circuits for other telecommunications which really require a telecommunication path of high quality. On the other hand, in the case of carrying out a data telecommunication which requires a high telecommunication quality in a high traffic area, the circuit is changed over to a lower-layer cell of lower quality despite the fact that the required quality is not being maintained.

Further, according to the conventional cell selecting techniques, there is a second problem in that calls are concentrated to large-cell stations of small number of circuits since cells are being selected regardless of the holding time and type of call.

According to the conventional cell selecting methods, there is a third problem in that since lower-layer cells of small-cell sizes are being selected with high priority, there arises a frequent occurrence of hand-over which results in a traffic increase between the devices attributable to the processing volume of each device and the hand-over.

Further, according to the technique disclosed in the Japanese Patent Laid-open Publication No. JP-A-5-252098, a cell change-over is carried out based on the number of hand-over. Accordingly, there is a fourth problem in that since a hand-over occurs due to a deterioration in the transmission speed or the quality followed by a cell change-over, even a small number of hand-over causes a temporary interference of data transmission which results in an extreme reduction in the transmission rate and transmission quality. This is fatal in the data telecommunication in which continuity is essential.

Further, according to each of the above-described prior-art techniques, it is impossible to connect circuits when there is no idle circuit in the telecommunication circuits at the base station which has been selected when a call was originated. Therefore, there is a fifth problem in that a return processing has to be done when there is no idle circuit at the radio base station of the same type of cell even if a change-over processing is carried out, which leads to a deterioration in the circuit quality and which may further result in a forced disconnection of the circuit.

There is also a sixth problem in that the circuit quality is deteriorated by a return of circuit which occurs when there is no idle circuit in a cell change-over destination during a telecommunication.

It is therefore an object of the present invention to provide a mobile telecommunication system for carrying out a telecommunication in good quality condition corresponding to the type of call by selecting an optimum cell based on the information of type of call and others, and a method for setting a telecommunication circuit.

It is another object of the present invention to distribute traffics to cells of each layer by selecting an optimum cell based on the information of type of call and others.

It is another object of the present invention to improve the processing volume of each device and improve traffics between the devices by reducing an occurrence of hand-over in a multi-layer system as well.

It is another object of the present invention to reduce the number of temporary interference of data transmission to thereby prevent a deterioration in the transmission rate and transmission quality in the case of a data telecommunication.

It is another object of the present invention to provide a mobile telecommunication system which can select a cell of other layer to achieve a circuit connection, when there is no idle circuit at a radio base station at the time of connecting the circuit to this radio base station of a cell which has been selected by the conventional cell selecting method or by the mobile telecommunication system of the present invention.

Further, it is another object of the present invention to provide a method of selecting other type of cell (a cell of other layer) as a channel switching destination when there is no idle circuit at a radio base station of the type of cell to which the circuit has to be changed over when it becomes necessary to switch the channel of the radio circuit during a telecommunication.

In order to achieve the above-described objects, the present invention is structured as follows. In a mobile telecommunication system for carrying out a service by dividing a mobile telecommunication service area into a plurality of cells, the divided plurality of cells are hierarchically structured by large-cells consisting of large service areas, middle-cells consisting of service areas smaller than the large-cell and small-cells consisting of service areas smaller than the middle-cell, a radio base station (BS) corresponding to the size of each of the service areas is provided in each of the large-cells, the middle-cells and the small-cells and each of the radio base stations (BS) is connected to a mobile switching center (MSC) for carrying out a call switching service, a personal station (PS) which can move between the cells is equipped with a unit for transmitting type of call information at the time of a call control, and the mobile telecommunication system includes a cell selector for selecting any one of cells out of the large-cells, the middle-cells and the small-cells as the cell to be utilized for telecommunication between the personal station (PS) and the radio base station (BS) based on the type of call information transmitted from the personal station (PS).

Further, according to the present invention, the type of call information consists of a signal which shows that the type of call to be set is any one of voice, image and data.

Further, according to the present invention, the personal station (PS) includes a unit for transmitting the information of the time of using a circuit, and the mobile switching center (MSC) includes a cell selector for selecting any one of cells out of the large-cells, the middle-cells and the small-cells as the cell to be utilized for telecommunication based on the information of the time for using a circuit posted from the personal station (PS).

Further, according to the present invention, the information of the time for using a circuit is the time for using a circuit calculated based on the information transmitted by the personal station (PS), and the invention provides a method of posting the time of using the circuit.

Further, according to the present invention, the personal station (PS) includes a unit for transmitting move speed information of the personal station, and the mobile switching center (MSC) includes a cell selector for selecting any one of cells out of the large-cells, the middle-cells and the small-cells as the cell to be utilized for telecommunication based on the move speed information of the personal station posted from the personal station (PS).

Further, according to the present invention, the personal station (PS) speed information is the move speed of the personal station calculated by the personal station (PS) or the information of a plurality of speed zones classified based on the move speed, and the invention provides a method of posting this information.

Further, according to the present invention, the personal station (PS) has a cell selector for selecting any one of the large-cells, the middle-cells and the small-cells as the cell to be utilized for telecommunication.

Further, according to the present invention, a cell selection is carried out based on the type of call information which shows that the type of call to be set is any one of voice, image and data. Further, the present invention provides a method of posting the type of call information.

Further, according to the present invention, the personal station (PS) has a cell selector which selects any one of the large-cells, the middle-cells and the small-cells as the cell to be utilized for telecommunication, based on the information of the time for using a circuit or the information of the move speed of the personal station.

Further, according to the present invention, the personal station (PS) has a cell selector which selects any one of the large-cells, the middle-cells and the small-cells as the cell to be utilized for telecommunication, based on the contents of a cell selection table.

Further, according to the present invention, the cell selection table connected to/included in the cell selector has at least one of the information of type of call, the information of the move speed of a personal station, and the information of the time for using a circuit as a table parameter, and further has the information of cells to be utilized by a personal station at a call originating side from various combinations of table parameters.

### BRIEF DESCRIPTION OF THE DRAWINGS

Fig. 1 is a diagram for showing a structure of a mobile telecommunication system relating to the present invention.

Fig. 2 is a diagram for showing a cell selection table relating to the present invention.

Fig. 3 is a diagram for showing a personal station location information table relating to the present invention.

Fig. 4 is a diagram for showing a layer paging area table relating to the present invention.

Fig. 5 is a diagram of a telecommunication circuit setting sequence according to the present invention.

Fig. 6 is a diagram of a telecommunication circuit setting sequence according to the present invention.

Fig. 7 is a diagram of a telecommunication circuit setting sequence according to the present invention.

Fig. 8 is a diagram of a telecommunication circuit setting sequence according to the present invention.

Fig. 9 is a diagram of a telecommunication circuit setting sequence according to the present invention.

Fig. 10 is a diagram of a telecommunication circuit setting sequence according to the present invention.

Fig. 11 is a diagram of a telecommunication circuit setting sequence according to the present invention.

Fig. 12 is a diagram of a telecommunication circuit setting sequence according to the present invention.

Fig. 13 is a diagram of a telecommunication circuit setting sequence according to the present invention.

Fig. 14 is a diagram for showing a structure of a mobile telecommunication system relating to the present invention.

Fig. 15 is a diagram for showing a cell selector relating to the present invention.

Fig. 16 is a diagram for showing a structure of a cell selection program relating to the present invention.

Fig. 17 is a diagram for showing a radio base station (BS) of the present invention.

Fig. 18 is a diagram for showing a control station of the radio base station (BS) of the present invention.

Fig. 19 is a diagram for showing a mobile switching center (MSC) of the present invention.

Fig. 20 is a diagram for showing a location information data base of the present invention.

Fig. 21 is a flow chart for showing a call originating side cell selection processing, relating to the present invention.

Fig. 22 is a flow chart for showing a cell selection processing at a call terminating side, relating to the present invention.

Fig. 23 is a flow chart for showing a processing of estimating a move speed of a personal station at the call terminating side, relating to the present invention.

Fig. 24 is a flow chart for showing a cell selection confirmation processing relating to the present invention.

Fig. 25 is a flow chart for showing a location registration processing relating to the present invention.

### DESCRIPTION OF THE PREFERRED EMBODIMENTS

Embodiments of the present invention will be explained below with reference to the drawings.

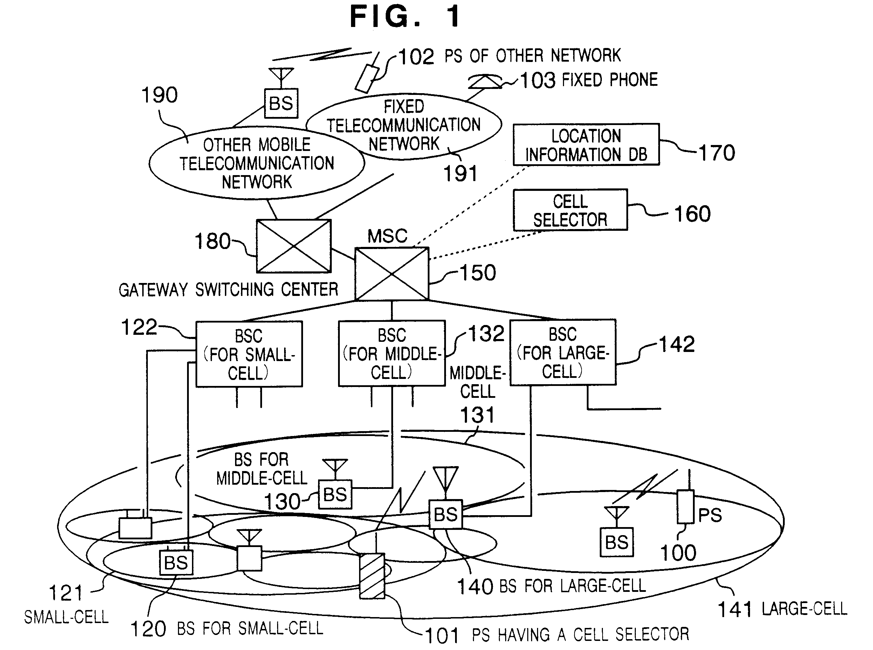

Fig. 1 shows a schematic structure of a mobile telecommunication network system to which the present invention is applied.

This network accommodates a plurality of personal stations (PS) (hereinafter to be referred to as PS) 100, 101, 102, etc. A radio base station (BS) for a small-cell (hereinafter to be referred to as a BS for a small-cell) 120 has a small-cell 121 as its service area. A radio base station (BS) for a middle-cell (hereinafter to be referred to as a BS for a middle-cell) 130 has a middle-cell 131 structured by a plurality of small-cells 121 as its service area. A radio base station (BS) for a large-cell (hereinafter to be referred to as a BS for a large-cell) 140 has a large-cell 141 structured by a plurality of middle-cells 131 as its service area. A base station controller (BSC) for small-cells (hereinafter to be referred to as a BSC for small-cells) 122 accommodates a plurality of BSs for small-cells 120. A base station controller (BSC) for middle-cells (hereinafter to be referred to as a BSC for middle-cells) 132 accommodates a plurality of BSs for middle-cells 130. A base station controller (BSC) for large-cells (hereinafter to be referred to as a BSC for large-cells) 142 accommodates a plurality of BSs for large-cells 140. Each of these BSCs is connected to a mobile switching center (MSC) (hereinafter to be referred to as an MSC) 150. Further, the MSC 150 has a cell selector 160 and a location information data base (hereinafter to be referred to as a location DB. This MSC 150 is connected to other mobile telecommunication network 190 and a fixed telecommunication network 191 for accommodating a fixed phone 103, through a gateway switching center 180, to carry out call switching connection.

The cell selector 160 selects a cell to be used for carrying out a telecommunication between a PS and a BS. The large-cell 141 of the mobile telecommunication network shown in Fig. 1 may be covered by a communication satellite. In the case of this structure, the BSC for large-cells 142 has an earth station and the earth station carries out telecommunication with a communication satellite through the satellite circuits so that the circuits are connected with personal stations through the satellite relay.

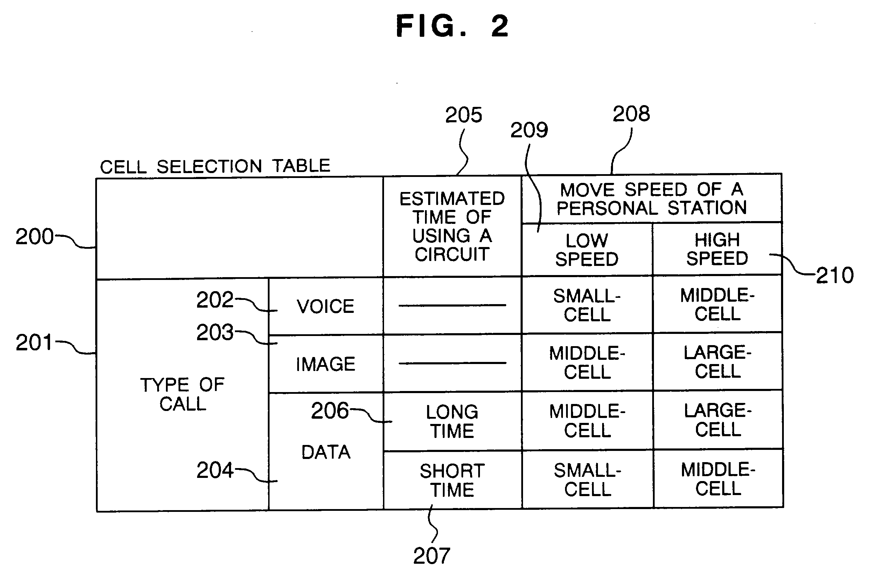

Fig. 2 shows an example of the outline of the logical structure of a cell section table 200. As information to be provided from the PS 100 to the cell selector through the BS, BSC and MSC, there are a type of call 201, estimated time of using a circuit 205 and a personal station move speed 208, for example. The type of call 201 shows the contents of information transmitted by telecommunication, and this specifically shows "voice" 202, "image" 203 or "data" 204. The estimated time of using a circuit 205 shows, prior to the starting of a telecommunication, an estimated time of occupying a telecommunication circuit, and this specifically shows class information such as "short time" 207 and "long time" 206 or estimated absolute time such as "33 minutes". The personal station move speed 208 means a move speed of a personal station, and this is given as speed class information such as "high speed" 210 and "low speed" 209 or as an actual move speed such as "100 km/h". The cell selection table 200 has a structure for determining a cell to be selected based on a combination of the above-described types of information.

A cell selection using the cell selection table 200 will be explained below based on an example. Consider a case where the "data" 204 as the type of call 201, the "long time" 206 as the estimated time of using a circuit 205 and the "high speed" 210 as the personal station move speed have been transmitted from the call originating side PS 100 through the BS, the BSC and the MSC. When these conditions are arranged on the cell selection table 200 in Fig. 2, a type of cell which exists at a cross point of the "data" 204, the "long time" 206 and the "high speed" 210 is a "large-cell", so that this "large-cell" is selected.

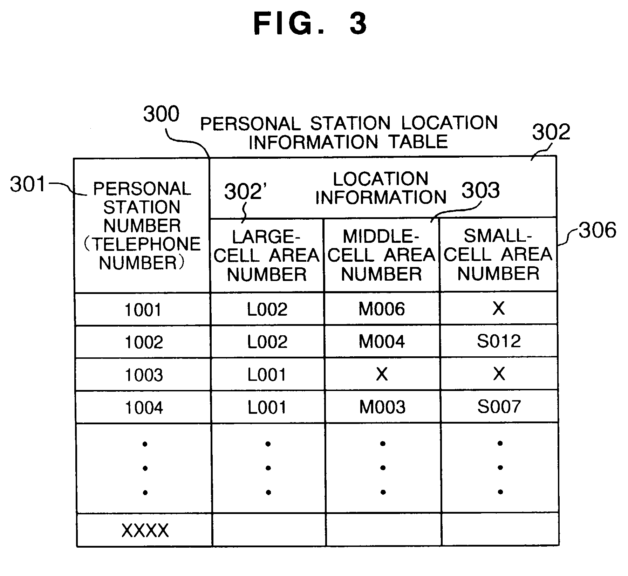

Fig. 3 is a diagram for showing a structure of a table held within the location information DB (data base) 170.

The location information DB 170 stores location information of the PS 100 or area information of the area in which the PS 100 is located, and this information is rewritten from time to time along with the move of the PS. The location information is referred to when the call terminating side MSC pages the PS 100 for terminating a call to the PS 100.

A base station location information table 300 is a table for storing an area in which the PS is located. This table holds an area number of each layer in which the PS is located corresponding to a personal station number (PSN) 301. For example, when a location registration is carried out from the PS of which personal station number is "1002" through the BS 120 which structures a small-cell belonging to an S012 area, "L002-M004-S012" is recorded within this table as the location information. Further, when a location registration is carried out from the PS of which personal station number is "1001" through BS130 which structures a middle-cell belonging to an M006 area, "L002-M006-X" is recorded within this table as the location information. In this case, either location information relating to the small-cell is not recorded or this information is set as a blank.

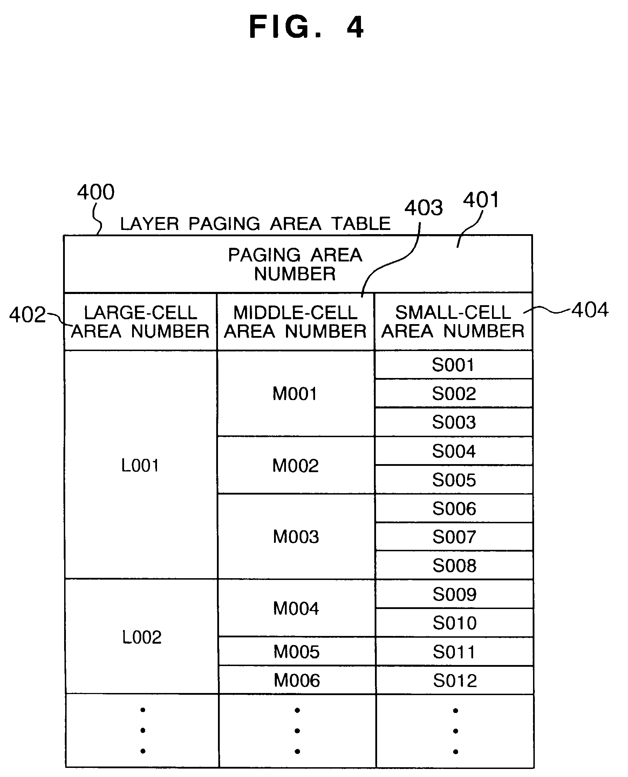

Fig. 4 shows a layer paging area table 400 to be held in the location information DB. This paging area table 400 is a table for showing a hierarchical structure of the PS paging area and corresponds to a multi-layer system. For example, when it is assumed that the paging area for paging the PS is structured by a plurality of same type of cells or by a single cell, the PS is paged from all the BSs within the same area at the time of paging the PS within this paging area for terminating a call. By referring to this table, an area located at a high level or a low level of an area of any desired layer can be easily accepted. For example, the high level area of the middle-cell area of an area number M002 is L001 and the low level areas of this middle-cell are S004 and S005.

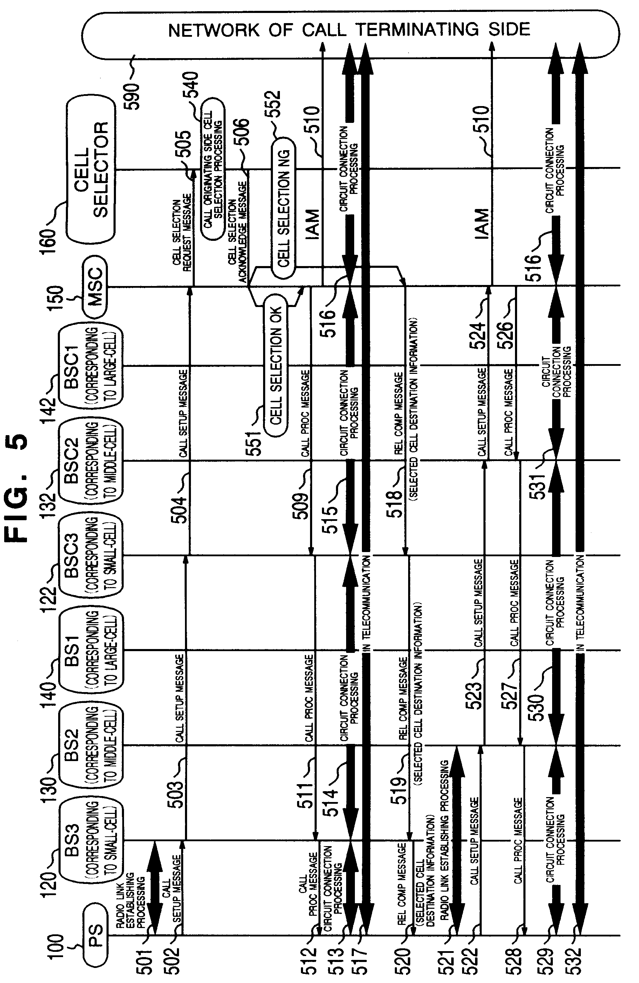

Fig. 5 shows a call connection sequence including a cell selection sequence at the time of a call from the PS 100.

The PS 100 carries out a radio link establishing processing 501 between the PS 100 and the small-cell BS 120, and transmits call SETUP messages (502, 503, 504) to the MSC 150 through the BS 120 and the BSC 122. Information such as the type of call 201 and a move speed of a personal station 108 which are used at the time of a cell selection processing is added to these messages, in addition to general connection information required for setting up a call. The MSC 150 which has received the call SETUP message 504 transmits a cell selection request message 505 including information of the type of call 201 and the move speed of the personal station 108 to the cell selector 160. The cell selector 160 starts a call originating side cell selection processing 540, and transmits a cell selection acknowledge message 506 to the MSC 150 upon finishing this call originating side cell selection processing 540. As the information of the cell selection acknowledge message 506, when a cell switching is not required or when the cell selection is OK (551), call setup receiving messages (CALL PROC messages) 509, 511 and 512 are transmitted to the PS 100, and an initial address message (hereinafter to be referred to as an LAM message) 510 is transmitted to the network side (call terminating side). A telecommunication is started (517) after carrying out a circuit connection processing 516. On the other hand, when the cell switching has been requested (i.e. when a cell selection is NG (552)), a release complete message (REL COMP message) (518) including type of cell of the switching destination is transmitted as information to the PS 100 in addition to general information elements. The PS 100 carries out a radio link establishing processing (521) to the BS 130 of the type of cell specified as the switching destination, and thereafter transfers call SETUP messages 522, 523 and 524 to the MSC 150. The MSC 150 returns call setup receiving messages (CALL PROC messages) 526, 527 and 528 to the PS 100, and transmits the IAM message 510 to the call terminating side MSC or the gateway switching center which is a call terminating side network 590. Last, a telecommunication is started (532) after circuit connection processings 516, 531, 530 and 529 are carried out.

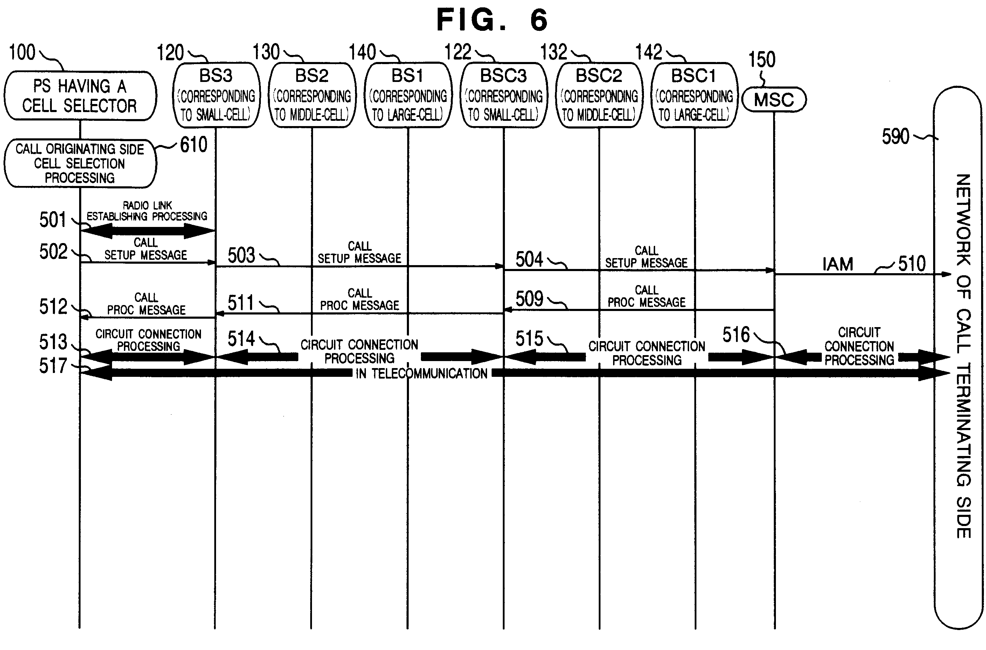

Fig. 6 shows a call connection sequence at the time of originating a call from the PS 100 which is a mobile personal station (PS) having a cell selection function.

The control section of the PS 100 starts a call originating side cell selection processing 610 and determines a type of cell at the call connection destination. Then the PS 100 carries out the radio link establishing processing 501 between the PS 100 and the BS 120 which has been determined as the call connection destination. The PS 100 transmits the SETUP messages 502, 503 and 504 to the MSC 150 through the BS 120 and the BSC 122. The MSC 150 returns the CALL PROC messages 509, 511 and 512 to the PS 100 and transmits the IAM message 510 to the call terminating side MSC or to the gateway switching center which is the call terminating side network 590. When a telecommunication circuit is opened after circuit connection processings 516, 515 and 513 have been carried out, a telecommunication is started (517).

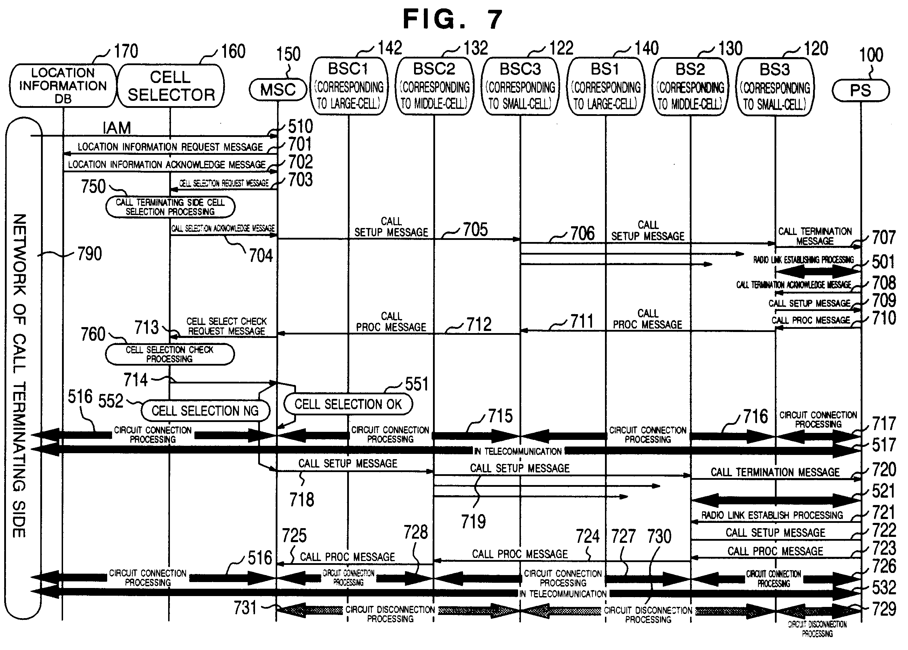

Fig. 7 shows a call connection sequence including a cell selection procedure at the time of a call termination to the PS 100.

The MSC 150 which has received the IAM message 510 from a call originating side network 790 (the call originating side MSC or the gateway switching center) transmits a location information request message 701 to the location information DB 170. The location information DB 170 searches an area number which is the location information of the call terminating side PS and replies a location information Ack message 702 including this information to the MSC 150. Next, the MSC 150 transmits a cell selection request message 703 to the cell selector 160 to request for a determination of the cell of the connection destination at the call terminating side PS. This message includes the type of call 201 to be transmitted from the call originating side network 790 (there is also a case where the type of call is not transmitted) and an area number as the location information of the call terminating side PS. The cell selector 160 which has received this message 720 starts a call terminating side cell selection processing to determine the type of cell covered by the BS to page the call terminating side PS, and transmits a cell selection acknowledge message 704 to the MSC 150. The MSC 150 transmits call SETUP messages 705, 706 and 707 to the call terminating side PS through the BSC 122 and the BS 120 corresponding to the type of cell of the connection destination. The call terminating side PS returns CALL PROC messages 710, 711 and 712 to the MSC 150. This message includes the move speed information of the call terminating side PS in addition to the general call SETUP messages. The MSC 150 which has received this message transmits a cell select check request message 713 including the move speed information of the call terminating side PS to the cell selector 160. The cell selector 160 starts a cell selection processing check 730, decides whether the type of cell determined by a call terminating side cell selection processing 760 is reasonable or not, and transmits a result of this decision to the MSC 150 by including this result into a cell selection acknowledge message 714. When the type of cell selected by the call terminating side cell selection processing 760 is reasonable (551), circuit connection processings 516, 715, 716 and 717 are carried out and then a telecommunication is started (517). On the other hand, when the type of cell is not reasonable (552), SETUP messages 718, 719 and 720 are transmitted to the PS 100 through the BSC 132 and the BS 130 of the type of cell (the middle-cell in the drawing) of a new connection destination determined at the time of the cell selection processing acknowledge. The PS 100 returns CALL PROC messages 723, 724 and 725 to the MSC 150. Then, circuit connection processings 726, 727, 728 and 516 are carried out to open a telecommunication circuit and a telecommunication is started (1332). Further, circuit disconnection processings 729, 730 and 731 are carried out for the old circuits (MSC 150 - BSC 122 - BS 120).

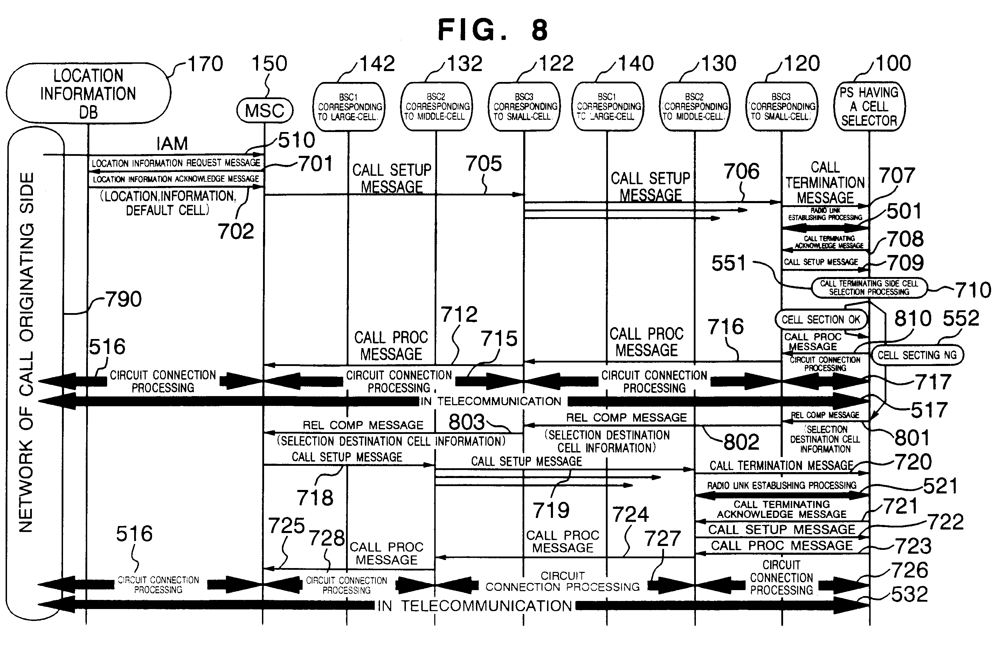

Fig. 8 shows a call connection sequence at the time of a call termination to the PS 100 which is a personal station (PS) having the cell selection function.

The MSC 150 which has received the IAM message 510 from the call originating side MSC or the gateway switching center located at the call originating side network 790 transmits the location information request message 701 to the location information DB 170. The location DB 170 retrieves an area number which is the location information of the call terminating side PS 100 and returns the location information Ack message 702 including this information to the MSC 150. Based on this location information, the MSC 150 determines the type of cell structuring the area of the lowest layer area number of the location information as the type of cell of the call connection destination, and transmits the call SETUP messages 705, 706 and 707 to the call terminating side PS 100 through the BSC 122 and the BSC 120 corresponding to the type of cell of the call connection destination. This message includes the information relating to the type of call 201 which is transmitted from the call originating side network (and there is also a case where this information is not included). The call terminating side PS starts the call terminating side cell selection processing 720, obtains a type of cell to which the PS is to be connected as an optimum cell based on the move speed of the PS and the type of call 201 to be transmitted from the call originating side, and decides whether or not this type of cell coincides with the type of cell of the BS to which the PS is currently connected. When a result of the decision is that these types of cell coincide with each other or when the cell selection is OK (551), the PS transmits CALL PROC messages 810, 716 and 712 to the MSC 150. Then, circuit connection processings 717, 716, 715 and 516 are carried out, and when the circuits are connected a telecommunication is stated (517). On the other hand, when the result of the decision is that these types of cell do not coincide with each other or when the cell selection is NG (552), the PS transmits a release complete message (REL COMP messages) 801, 802 and 803 by including information of the type of cell of a new connection destination in this message, to the MSC 150. The MSC 150 transmits call SETUP messages 718, 719 and 720 to the PS 100 through the BSC 132 and the BS 130 of the type of cell of the new call connection destination. The PS 100 returns CALL PROC messages 723, 724 and 725 to the MSC 150. Then, after carrying out circuit connection processings 726, 727, 728 and 516, a telecommunication is started (532).

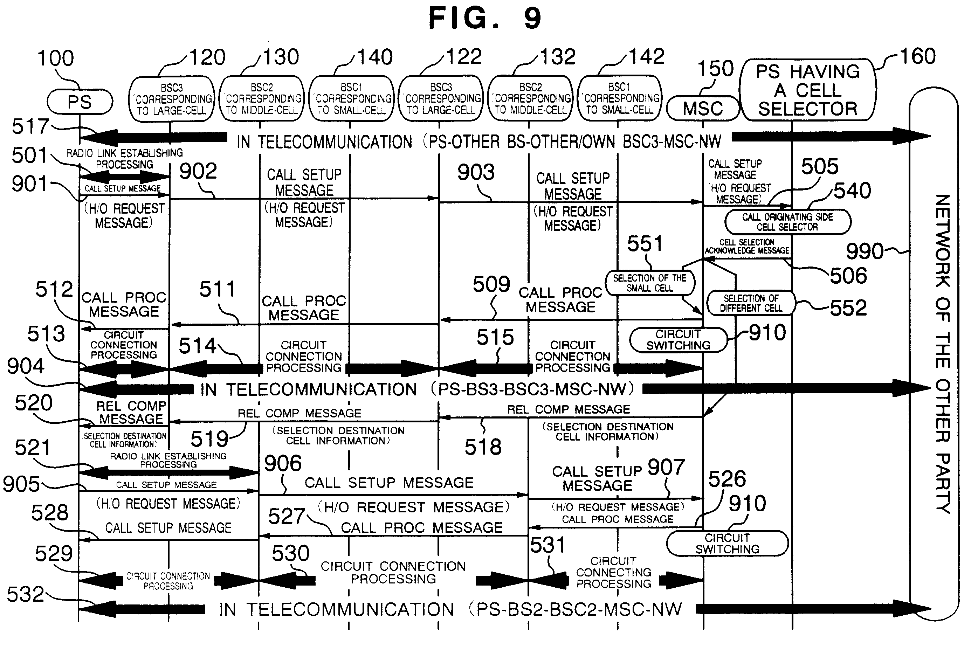

Fig. 9 shows a call connection sequence including a cell selection sequence at the time of carrying out a hand over from the PS 100.

When the PS 100 wants to request a hand over (hereinafter to be referred to as an H/O) because of quality deterioration of the radio circuits between the PS and the BS during the telecommunication 517 or for other reason, this PS 100 transmits a call SETUP message 901 including the H/O request to the MSC 150. The subsequent processings and the procedures of each unit are the same as those at the time of originating a call. However, the MSC 150 does not transmit a message to the PS of the other party of the telecommunication which is the network of the other side or to a network 990 in which a fixed phone is accommodated. The MSC 150 carries out a channel switching (910) from the old connection circuit to the new connection circuit after transmitting CALL PROC messages 509, 511, 512.

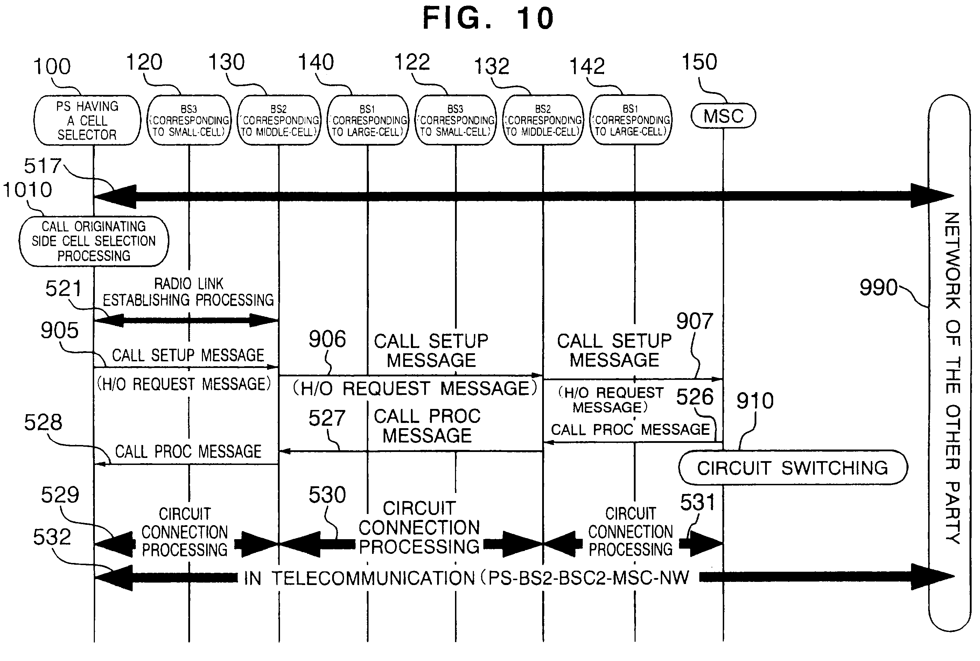

Fig. 10 shows a call connection sequence at the time of requesting a hand-over from the personal station 100 having the cell selection function.

The PS starts a call originating side cell selection processing 1010 for requesting an H/O because of a quality deterioration of the radio circuits between the PS and the BS during the telecommunication 517. The call originating side cell selection processing 1010 determines a type of cell of the H/O destination and transmits a call SETUP message 905 including an H/O request to the BS 130 of the same type of cell of which circuit quality is satisfactory. Further, the PS 100 transmits SETUP messages 906 and 907 to the MSC 150 through the BSC 132. The subsequent processings and the procedures of each unit are the same as those at the time of originating a call. However, the MSC 150 does not transmit a message to the network of the other party 790 (the other party PS of the telecommunication or the network in which the fixed phone is accommodated). The MSC 150 carries out a channel switching (910) from the old connection circuit to the new connection circuit after transmitting CALL PROC messages 526, 527, 528.

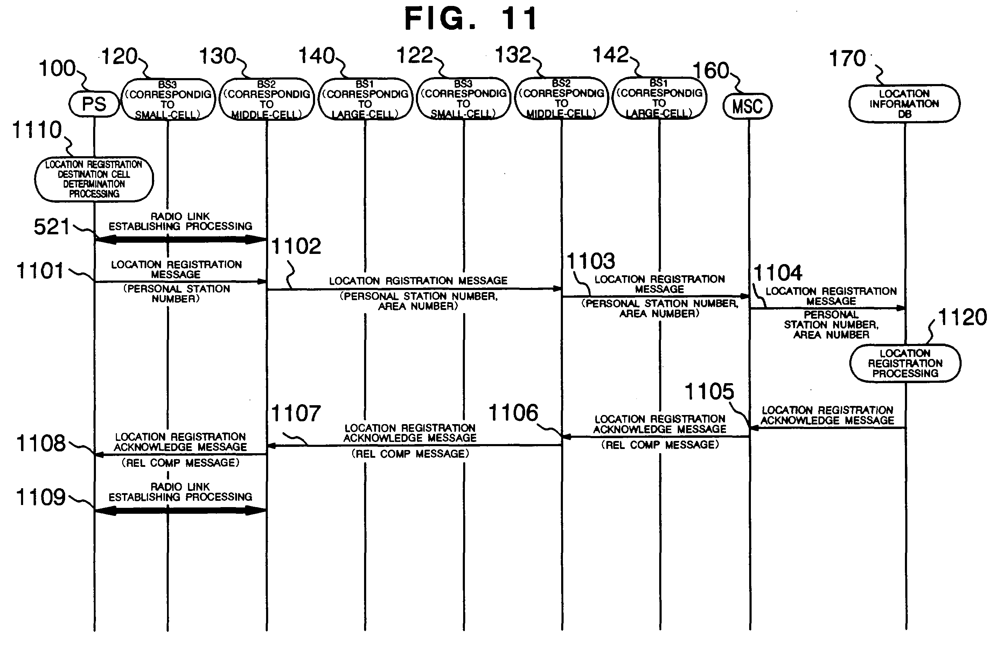

Fig. 11 shows a sequence when the PS 100 carries out a location registration.

Description will be made of the case where the paging area of the PS 100 has been changed along with the move of the PS 100. The PS 100 starts a processing for determining a cell of the location registration destination 1110 and retrieves a BS to which a channel can be connected from a lower layer cell by searching the carrier emitted by the BS. After carrying out a radio link establishing processing 521, the PS 100 transmits a location registration message 718 to the BS 130, detected by this processing, to which the circuit can be connected. The BS 130 transmits location registration messages 1101 and 1102 to the MSC 150 through the BSC 132. These messages include the personal station number of the PS of which location registration is requested and the area number of the paging area to which the BS 130 belongs. The MSC 150 then transmits a location registration message 1104 to the location information DB 170 in the similar manner. After receiving this message, the location information DB 170 starts a location registration processing 1120 and writes the area number which is the location number of the PS 100 in the location information table. After finishing this processing, the location information DB 170 transmits a location registration Ack message 1105 to the MSC 150. Then, the MSC 150 transmits location registration Ack messages 1106, 1107 and 1108 to the PS 100 to inform that the location registration has been carried out. The circuit can be disconnected and released by utilizing the REL COMP message as the location registration message. The location registration of the PS 100 having the cell selector is also carried out in the similar sequence.

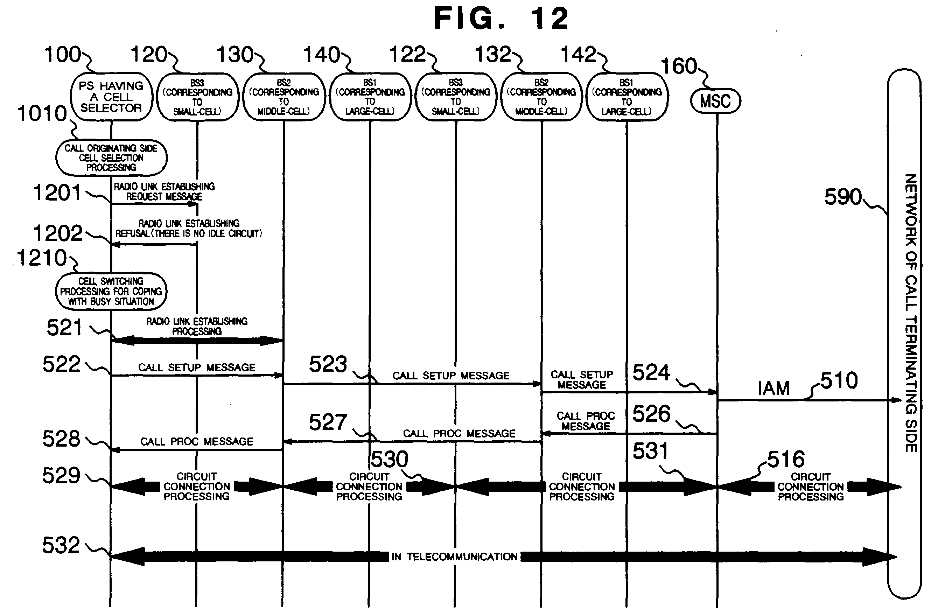

Fig. 12 shows a call connection sequence to be carried out when the call originating side radio circuit is BUSY. To be more specific, when a call is to be originated from the PS 100 which is a personal station having the cell selection function, the circuit is changed over to a circuit of the BS of other type of cell for carrying out a telecommunication, when the radio circuit between the PS and the BS is BUSY.

The PS 100 starts a call originating side cell selection processing 1010 and determines a type of cell or a BS of the call connection destination. The PS 100 carries out a radio link establishing processing for establishing a link with the BS 120 which has been determined as the call connection destination, but receives a circuit BUSY notice which means there is no idle circuit from the BS 120 (1202). Then, the PS 100 starts a cell switching processing 1210 to solve this BUSY problem and determines a new BS of other type of cell. After establishing a radio link establishing processing 521 to the BS 130 which has been determined by the above processing, the PS 100 carries out a call originating processing through each unit to connect the circuit and starts a telecommunication.

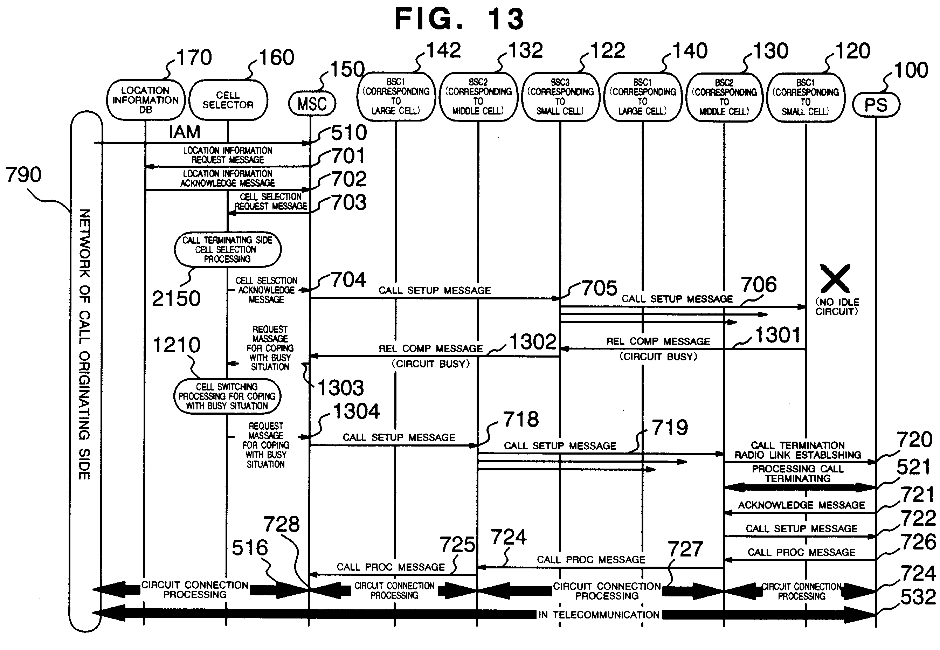

Fig. 13 shows a call connection sequence to be carried out when the call terminating side radio circuit is BUSY. To be more specific, when a call is to be terminated from the MSC 150 to the PS 100, the circuit is changed over to a circuit of the BS of other type of cell for terminating the call to the call terminating side PS and connecting the circuit, when the radio circuit between the call terminating side PS and the BS is BUSY.

Similar to the call terminating sequence as described in Fig. 7, the MSC 150 transmits call SETUP messages 705 and 706 to the BSC 120. When there is no idle circuit between the BS 120 and the PS 100, the BS 120 transmits REL COMP messages 1301 and 1302 including the information of no idle circuit (circuit BUSY) to the MSC 150. The MSC 150 having received this message transmits a request message for solving the BUSY situation 1303 to the cell selector 160. The cell selector 160 then starts a cell switching processing 1210 to cope with the BUSY situation, determines other new type of cell and transmits a BUSY processing acknowledge message 1304 including the information of the determined type of cell, to the MSC 150. The MSC 150 transmits SETUP messages 718 and 719 to the BS 130 of the determined type of cell through the BSC 132. Thereafter, a telecommunication is started. The cell switching processing for solving the BUSY situation 1210 is also started when there is no idle radio circuit after acknowledging the cell selection processing 760.

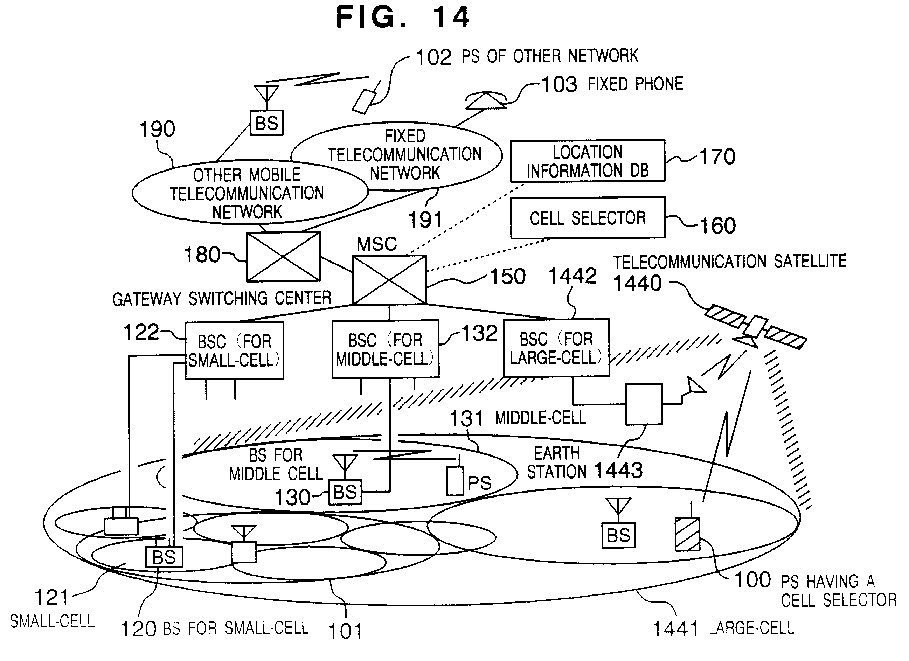

Fig. 14 shows a case where the large-cell 141 of the mobile telecommunication network shown in Fig. 1 is a radio zone covered by a communication satellite 1440.

A large-cell 1441 is covered by the communication satellite 1140 and covers a plurality of PSs 100 structured by a plurality of middle-cells 131, in the same manner as in Fig. 1. A BSC 1442 for the large-cell is connected with an earth station (hereinafter to be referred to as a large-cell BS since this is handled equally with the large-cell BS) for carrying out a telecommunication with the communication satellite 1440.

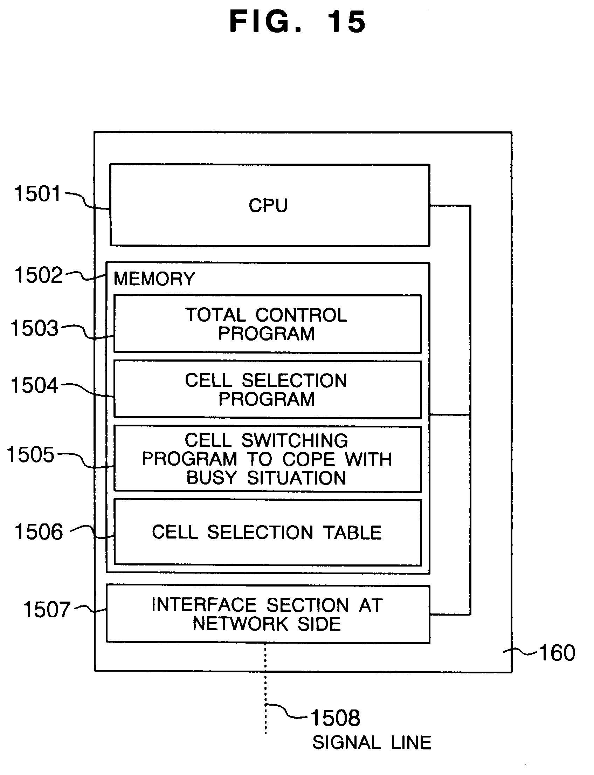

Fig. 15 shows an example of the schematic structure diagram of the cell selector 160.

The cell selector 160 is structured by a CPU 1501, a memory 1502 and a network side interface section 1507. The network side interface section 1507 carries out a processing for connecting the cell selector 160 with the MSC 150 through a signal line 1508. A memory 1502 has a cell selection program 1504 for carrying out a cell selection processing when a cell selection message has been received from the network side. A cell selection table 1506 to be used for a cell selection processing is a table for selecting a type of cell based on call information transmitted from the network side. To be more specific, this table shows a relationship with cells corresponding to a combination of specific call information and a time for using a circuit, etc. The cell selector 160 has also a BUSY time cell switching program 1505 for selecting other type of cell when the radio circuit is closed at the time of a call termination and a total control program 1503 for controlling the whole of the cell selector.

The CPU 1501 carries out such processings as calculation and control based on each of the above-described programs (1503, 1504 and 1505).

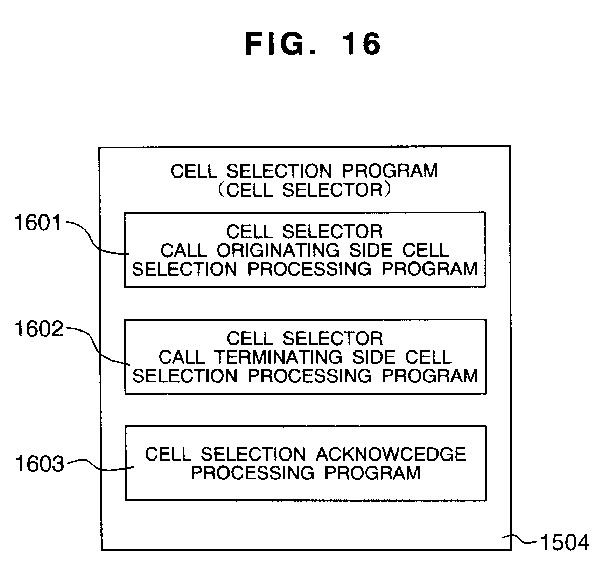

Fig. 16 is a diagram for showing a detailed structure of the cell selection program 1504.

The cell selection program 1504 is structured by a cell selector call originating side cell selection processing program 1601, a cell selector call terminating side cell selection program 1602 and a cell selector cell selection processing check program 1603.

The cell selector call originating side cell selection processing program 1601 is a program to be started when a call originating side cell selection processing has been requested from the call originating side MSC to determine an optimum type of cell as a connection destination of the call originating side PS.

The cell selector call terminating side cell selection program 1602 is a program to be started based on a request from the call terminating side MSC when a call is to be originated from a PS 102 of other network or the fixed phone 103, for example, to the PS 100. To be more specific, this is a program for determining a type of cell of the BS which is to be connected with the PS 100 at the call terminating side.

The cell selector cell selection processing check program 1603 is a program to be started based on a request from the call terminating side MSC, and this program is used to confirm whether or not the connected cell of the call terminating side PS selected by the call terminating side cell selection processing is an optimum cell determined based on various conditions such as a type of call, a move speed of the personal station, etc.

Fig. 2 shows an example of the outline of the logical structure of the cell section table 1506. As information to be provided from the PS 100 to the cell selector through the BS, BSC and MSC, there are a type of call 201, estimated time of using a circuit 205 and a personal station move speed 208, for example. The type of call 201 shows the contents of information transmitted by telecommunication, and this specifically shows "voice" 202, "image" 203 or "data" 204. The estimated time of using a use 205 shows, before starting a telecommunication, an estimated time of occupying a telecommunication circuit, and this specifically shows class information such as "short time" 207 and "long time" 206 or estimated absolute time such as "33 minutes". The personal station move speed 208 means a move speed of a personal station, and this is given as speed class information such as "high speed" 210 and "low speed" 209 or as an actual move speed such as "100 km/h". The cell selection table 1506 has a structure for determining a cell to be selected based on a combination of the above-described types of information.

A cell selection using the cell selection table 1506 will be explained below based on an example. Consider a case where the "data" 204 as the type of call 201, the "long time" 206 as the estimated time of using a circuit 205 and the "high speed" 210 as the personal station move speed have been transmitted from the call originating side PS 100 through the BS, the BSC and the MSC. When these conditions are arranged on the cell selection table 1506 in Fig. 2, a type of cell which exists at a cross point of the "data" 204, the "long time" 206 and the "high speed" 210 is a "large-cell", so that this "large-cell" is selected.

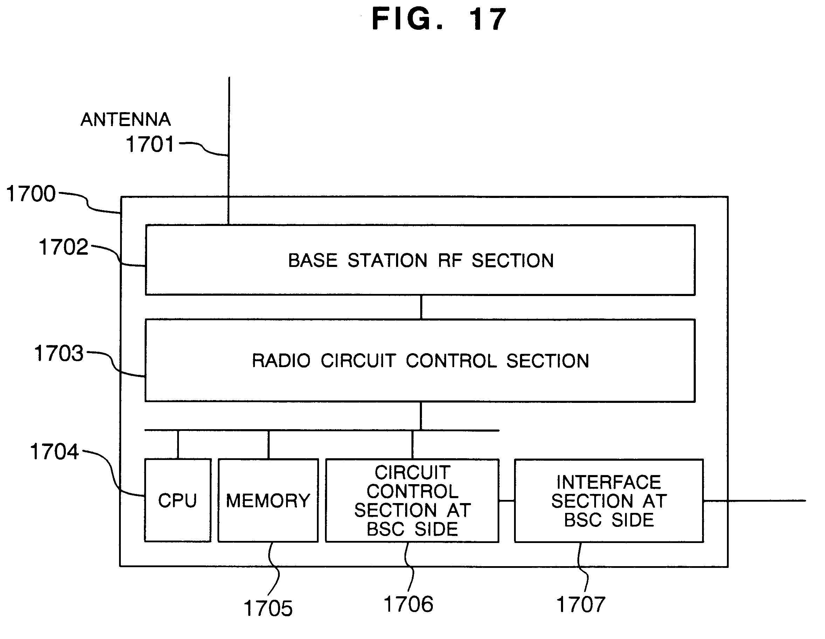

Fig. 17 shows a structure of a base station (BS) 1700 such as the BS 120, BS 130 and BS 140 explained in Fig. 1.

The BSA 1700 is structured by an antenna 1701 for carrying out transmission and receiving of waves to and from the PS 100 and others, a base station RF section 1702, a radio circuit control section 1703 for transforming transmitted/received waves into signals and controlling the circuits between the PS and the BS, a BSC side interface section 1707 for transmitting and receiving signals to and from the BSC, a network side circuit control section 1706 for controlling the circuits between the PS and the BSC, a storage unit 1705 such as a memory and a fixed storage unit for storing data and programs for executing an internal processing of the BS, and a CPU 1704 for executing each program stored in the storage unit 1705 and calculating each data. Further, the earth station 1443 also has almost the same structure, but has a different type of antenna depending on the frequency to be used since the radio section is between the BS 1443 and the communication satellite 1440.

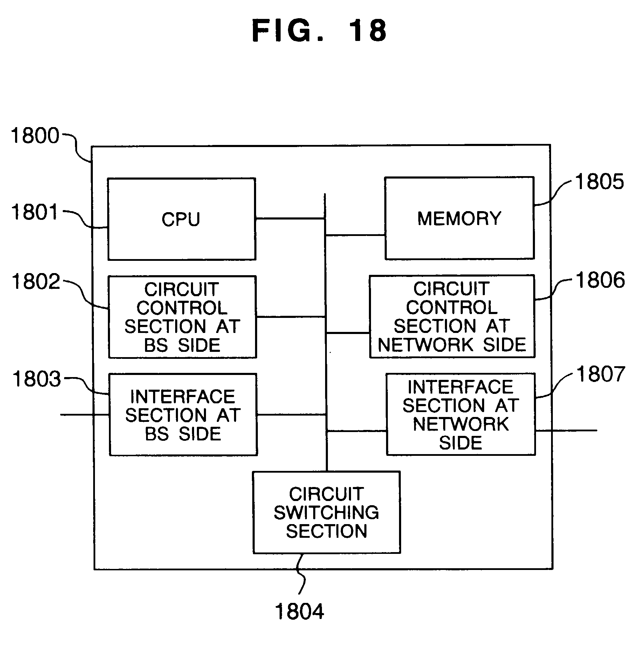

Fig. 18 shows an example of the structure of the BSCs 122, 132 and 142 shown in Fig. 1.

The BSC 1800 is structured by a BS side interface section 1803 for transmitting and receiving signals to and from the BSC, a network side circuit control section 1802 for controlling the circuits between the BS and the BSC, a network side interface section 1807 for transmitting and receiving signals to and from the MSC, a network side circuit control section 1806 for controlling the circuits between the BSC and the MSC, a circuit switching section 184 for switching the circuits between the BS side and the MSC side, a storage unit 1805 consisting of a memory and a fixed storage unit for storing data and programs for executing an internal processing of the BSC, and a CPU 1801 for executing each program stored in the storage section 1805 and calculating each data.

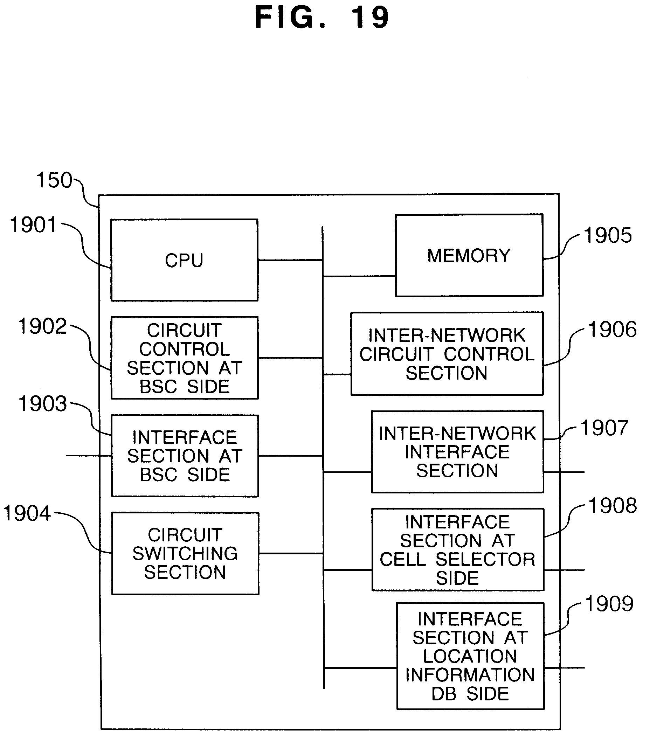

Fig. 19 shows an example of the structure of the MSC 150.

The MSC 150 is structured by an BSC side interface section 1903 for carrying out transmission and receiving of signals to and from the BSC, a BSC side circuit control section 1902 for controlling circuits between the BSC and the MSC, an inter-network interface section 1907 for transmitting and receiving signals to and from other MSC or the gateway switching center 180, an inter-network circuit control section 1906 for controlling circuits between the own MSC and other MSC, a circuit switching section 1904 for carrying out a switch processing of circuits between the BSCs or between the BSC and the network, a cell selector side interface section 1908 for carrying out transmission and receiving of signals to and from the location information DB 170 and control of the circuits, a storage section 1905 including memories for storing data and programs for executing an internal processing of the MSC, and a CPU 1901 for executing each program stored in the storage section 1905 and calculating each data.

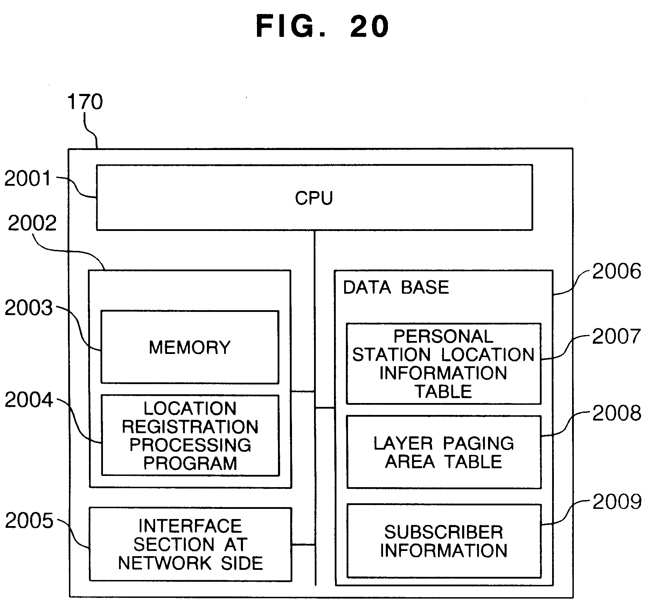

Fig. 20 shows a schematic structure of the location information data base 170 for holding/storing location information of the PS.

The location information data base 170 (hereinafter to be refereed to as a location information DB) is structured by a data base section 2006 for holding information relating to PSs, layer cells and subscribers, a storage section 2002 such as a memory and a fixed storage unit for holding programs for managing each of these information, a CPU 2001 for starting programs of the storage section 2002, and a network side interface section 2005 for controlling the interface to be connected with the MSC 150.

Further, the data base 2006 is structured by personal station location information table 2007 for storing location information of the PS 100 and others, a table for showing a layer structure of the PS paging area of each type of cell corresponding to the multi-layer system, and a subscriber information table 2009 for holding information different for each subscriber and for each PS. The PS paging area is structured by a plurality of same type of cells or a single cell, for paging a PS from all the BSs within the paging area at the time of a call termination.

The memory 2002 is structured by a location information DB management program 2003 for carrying out a retrieval of the location information of the PS and a read processing and a location registration processing program 2004 for actually carrying out a location registration processing required from the PS.

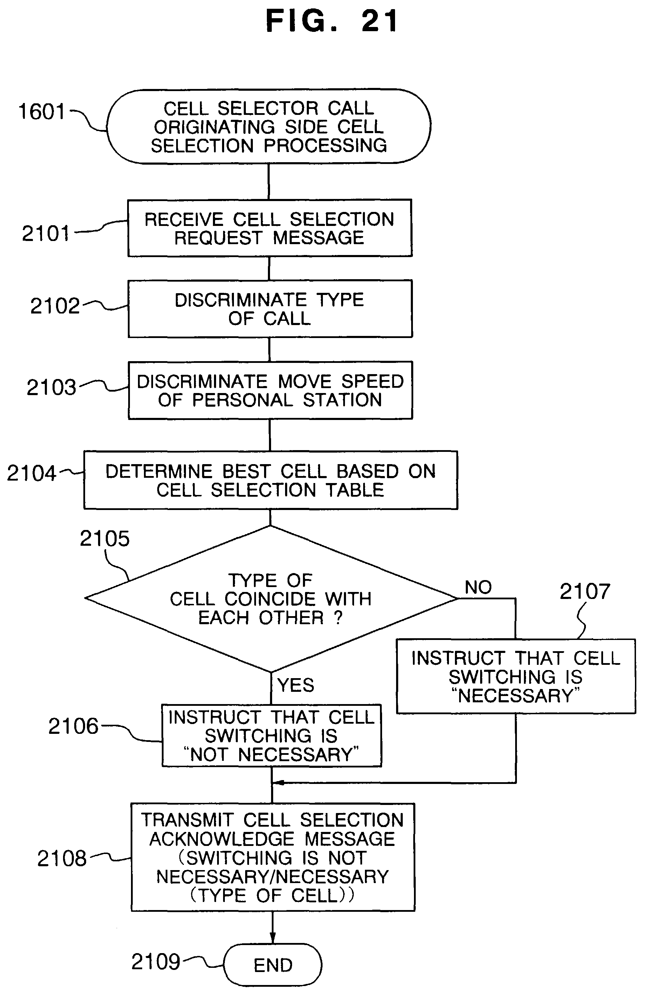

Fig. 21 shows an operation flow chart of the call originating side cell selection program 1601. The cell selector 160 is integrally controlled by the integral control program 1503. When the network side interface section 1507 has received a message from the MSC 150 for requesting an execution of the call originating side cell selection processing (hereinafter to be referred to as a "cell selection request message (call originating side cell selection processing)", the CPU 1501 executes the call originating side cell selection processing program 1504, so that the call originating side cell selection processing is started (2101).

In the call originating side cell selection processing, at first a discrimination is carried out for the type of call 201 ("voice" / "image" / "data") which is included in the cell selection request message transmitted from the call originating side PS through the BS, BSC an MSC (2102). The type of call information is stored in the memory 1502. Further, when the "data" 204 and the circuit estimated time 205 ("long time" / "short time" or a time value) are also being transmitted from the call originating side PS, these are also stored in the memory 203. When the personal station move speed 208 ("low speed" / "high speed" or a move speed value) is also transmitted from the call originating side PS, this speed is also discriminated (2103) and the information is stored in the memory 203. Next, each of the above-described information stored in the memory 203 is allocated to the cell selection table 1506 and the best type of cell ("large-cell" / "middle-cell" / "small-cell") to be connected by the call originating side PS is selected (2104). Next, confirmation is made whether or not the type of cell of the BS transmitted from the call originating side BS coincides with the selected best type of cell (2105). If the types of cell do not coincide with each other, an instruction is made to the call originating side PS for carrying out a cell switching (BS switching) (2107). The type of cell assigned as the switching destination is the best type of cell selected by the processing of the 2104. A cell switching necessary message for instructing a switching of the type of cell including the type of cell of the switching destination is generated, a cell selection acknowledge message is transmitted from the network side interface section 1507 to the MSC (2108), and the processing is finished (2109).

On the other hand, when the type of cell of the BS connected with the call originating side PS coincides with the best type of cell selected by the processing 2104, an instruction that it is not necessary to switch the cell is transmitted to the call originating side PS (2106). In this processing, a cell switching unnecessary message for instructing the no need for cell switching is generated and this message is transmitted from the network side interface section 1507 to the MSC (2108), and the processing is finished (2109).

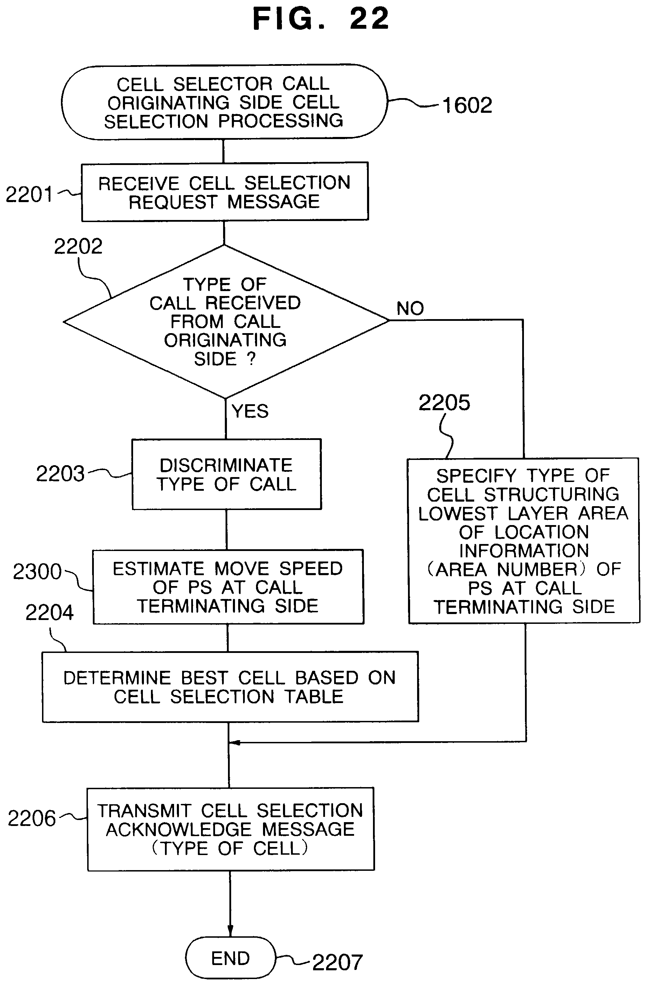

Fig. 22 shows an operation flow chart of the call terminating side cell selection processing program 1602 which is used for selecting a cell to be used by the personal station (PS) at the call originating side. When the cell selector 160 to be integrally controlled by the total control program 1503 has received a message for requesting an execution of the call terminating side cell selection processing (hereinafter to be referred to as a "cell selection request message (call terminating side cell selection processing)" from the MSC 150 at the network side interface section 1507, the CPU 1501 executes the call terminating side cell selection processing program 1602 to select the call terminating side cell (2201).

In the call terminating side cell selection processing, at first a decision is made as to whether or not the cell selection request message includes the type of call 201 transmitted from the call originating side PS through the call originating side BS, the call originating side BSC, the call originating side MSC and the call terminating side MSC (2202).

When the type of call 201 is included in the cell selection request message, a discrimination is made of the type of call (2203), and the type of call information is stored in the memory 1502. When the type of call "data" 204 and the circuit estimated time 205 are also being transmitted from the call originating side PS, these information are also stored in the memory 1502 in the similar manner. The move speed of the call terminating side PS which is the move speed of the personal station is not known at the time when the call terminating side cell selection processing is started (except the case where the move speed of the call terminating side PS is known at the time of the starting when the location of the personal station is always managed together with move speed at the location registration side). Therefore, the move speed of the personal station must be calculated. As an example of the calculation of the move speed, the location information of the call originating side PS included in the cell selection request message transmitted from the MSC is received, and the move speed of the call terminating side personal station is estimated based on the call terminating side PS location information which has been received. The move speed (estimated speed) of the call terminating side PS which has been obtained by carrying out the processing of estimating the PS move speed at the call terminating side (2300) is stored in the memory 1502. Next, each of the above information stored in the memory 1502 is allocated to the cell selection tale 1506, and the best type of cell to be connected by the call terminating side PS is selected (2204). Next, a cell selection acknowledge message including the type of cell selected by the processing 2204 is generated and this message is transmitted from the network side interface section 2207 to the MSC (2206). Then, the processing is finished (2207).

On the other hand, when the type of cell 201 is not included in the cell selection request message, the type of cell structuring the lowest layer area is determined as the connection destination of the call terminating side PS based on the location information of the call terminating side PS or the area number of the type of layer held according to the layer structure of the cell (2205). For example, when the large-cell paging area number and the middle-cell paging area number are registered as the location information, the middle-cell is selected as the connection destination. Then, the cell selection acknowledge message including the type of cell selected by the processing 2205 is generated and this message is transmitted from the network side interface section 1507 to the MSC (2206), thus finishing the processing (2207).

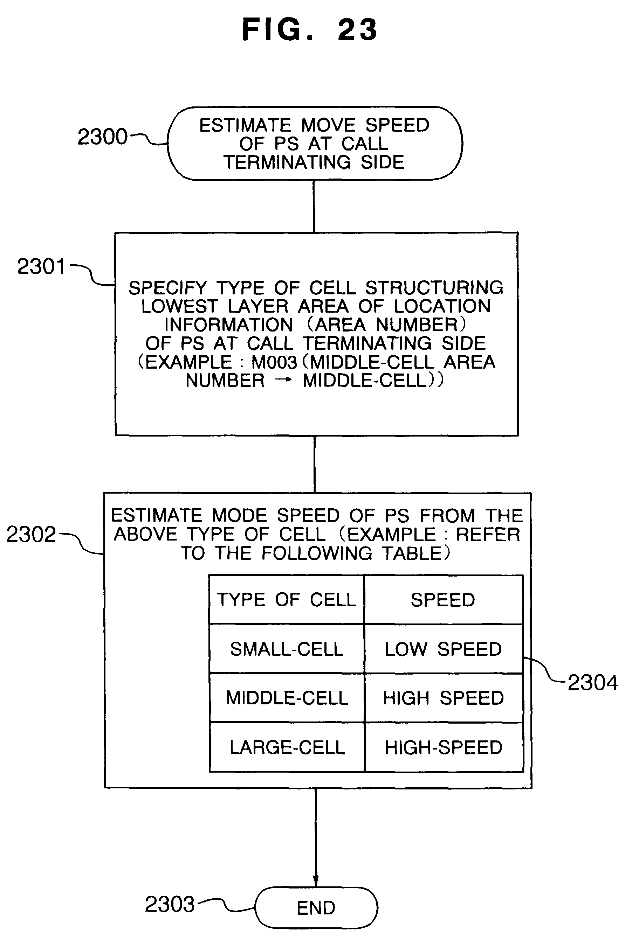

Fig. 23 shows an operation flow chart of the call terminating side PS speed estimating program 2300.

The cell selector 160 executes the call terminating side cell selection program 1602. In this call terminating side cell selection processing, the CPU 1501 executes the call terminating side PS speed estimating program 2300 when there is a request for the processing of call terminating side PS speed estimating processing.

In this processing, the type of cell of the lowest layer area is specified out of the location information of the call terminating side PS included in the cell selection request message (2301). As a detailed method of specification, when the cell area number transmitted is a single cell number, this cell area is specified, and when a plurality of cell area numbers are transmitted, a cell area of the lower cell is specified. For example, when the large-cell area number L001 and the middle-cell area number M003 are transmitted from the MSC as the call terminating side PS location information, the middle-cell area which is located at a lower level than the large-cell is specified. Next, the type of cell specified by the processing 2301 is corresponded to the type of cell/speed correspondence table 244 (2302). The table 2304 in Fig. 23 is shown as one example. The structure of this table is prepared for the purpose of cancelling the hand-over which occurs frequently along with high-speed moves of the personal stations within the small-cell, by providing a telecommunication service in wider service area cells. This table is not limited to this format, but may be in any other structure so long as the table structure can cancel disadvantages due to the hand-over. As an example of determining the move speed of the personal station based on the table 2304, the "high speed" is determined from the table when the type of cell specified by the processing 2301 is the "middle-cell". Then, the PS speed estimating processing is carried out by the processing 2302, thus finishing the call terminating side PS speed estimating processing. At the time of finishing this processing, the estimated speed of the call terminating side PS is passed to the call terminating side cell selection processing.

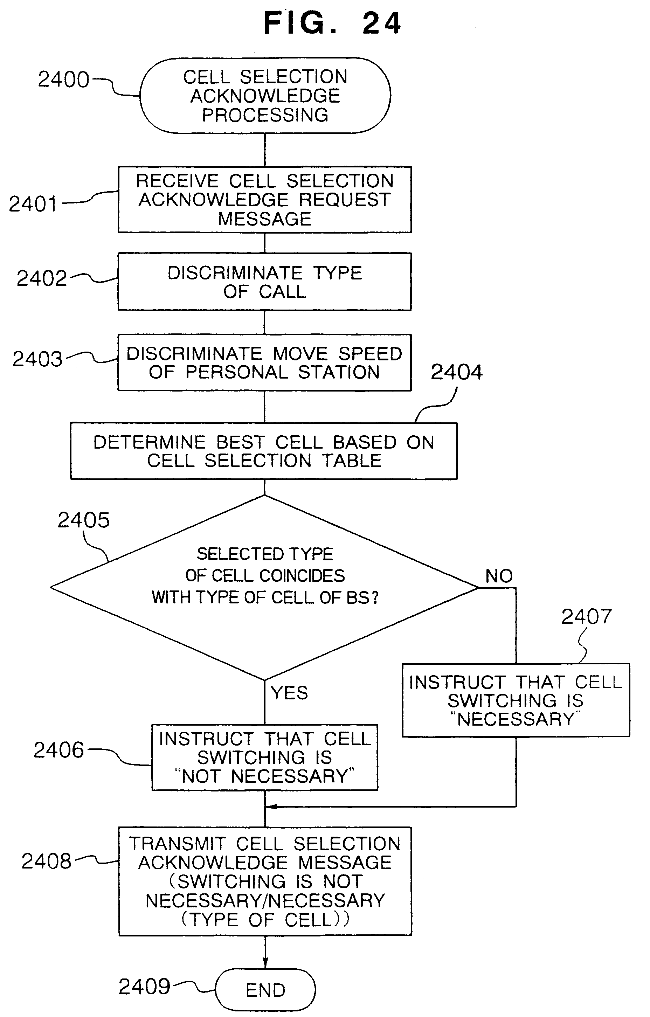

Fig. 24 shows a processing flow chart at the time when the CPU executes the cell selection processing check program 1603. When the cell selector 160 which is controlled by the cell selector integrated control program 1504 has received a cell select check request message from the MSC 150 at the network side interface section 1507, the CPU 1501 executes the cell selection processing acknowledge program 1603 to confirm the cell selection processing (2401). The information of the move speed of the personal station at the call terminating side 208 which has been transmitted through the call terminating side PS - the call terminating side BS - the call terminating side BSC is included in the cell selection acknowledge message.

In the cell selection processing check, at first the type of call 201 stored in the memory 1502 is retrieved at the time of the call terminating side cell selection processing which is carried out prior to the present processing (2402). Further, the move speed of the personal station 208 transmitted from the call terminating side PS (2403) is stored in the memory 1502. Next, each of the above information such as the type of call stored in the memory 1502 is allocated to the cell selection table 1506, and the best type of cell to be connected by the call terminating side PS is selected (2404). Next, a decision is made as to whether or not the best type of cell selected at the step 2404 coincides with the type of cell of the BS to which the call terminating side PS is connected at this point of time (2405). When a decision is made that these types of cell do not coincide with each other, the switching instruction processing for instructing the call originating side PS to switch the cell to the BS of the best cell is carried out (2407). A cell switching necessary message which is a kind of the cell selection acknowledge message is generated and this message is transmitted from the network side interface section 1507 to the MSC (2408), thus finishing the processing (2409). On the other hand, when a decision has been made that the type of cell of the BS to which the call terminating side PS is connected is the same as the best type of cell selected by the processing 2404, an instruction is made to the call terminating side PS that it is not necessary to switch the cell (2406). In this case, in the processing of 2406, the "it is not necessary to switch the cell" means that "the type of cell is to be maintained", and therefore, it may be so structured that no switching instruction is generated. Thereafter, the cell switching unnecessary message which is a type of the cell selection acknowledge message is generated and this message is transmitted from the network side interface section 1507 to the MSC (2408), thus finishing the processing (2409).

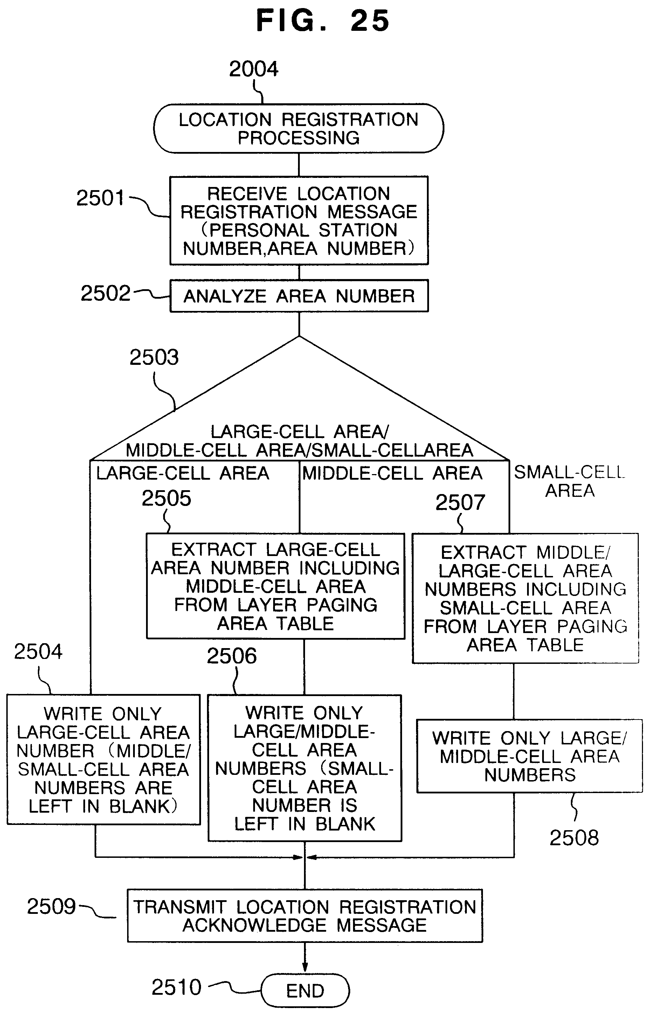

Fig. 25 shows an operation flow chart of the location registration processing program 2004 which is carried out in the location information DB 170.

The location registration processing will be explained below. When the PS 100 has moved from any one paging area to other paging area, a location registration request message is transmitted to the location information DB through the BS - the BSC - the MSC. The location information DB which has received this message starts the location registration processing. In the location registration processing, at first the location information DB 170 receives a message of the location registration processing issued by the MSC 150 (hereinafter to be referred to as a location registration message). The location registration message includes a personal station number of the PS of which location registration is being requested and an area number of the area in which the PS is located (2501). Next, the received area number is analyzed and a discrimination is made as to which one of the "large-cell area number", the "middle-cell area number" and the "small-cell area number" the area number belongs to (2502, 2503).

When the result of the analysis in 2503 shows that the area number is the large-cell area number, only this number is written in the location information table 300, and the middle-cell/small-cell number columns are left in blank (2504).

When the result of the analysis in 2503 shows that the area number is the middle-cell area number, the large-cell area number 402 is extracted from the middle-cell area number 403 by referring to the layer paging area table 400 (2505), and this large-cell area number is written in the location information table 300 of the large/middle-cell area numbers (2506). The middle-cell area number column is left in blank. Keeping this column blank is useful for making a decision of the smallest layer registered.

When the result of the analysis in 2503 shows that the area number is the small-cell area number, the middle-cell area number 403 is extracted from the small-cell area number 404 and the large-cell area number 402 is extracted from the middle-cell area number 403 by referring to the layer paging area table 400 (2507), and the area numbers of the large/middle/small-cell areas are written in the location information table 300 (2508). Upon finishing the writing of the area numbers, the completion of the writing is included in the location registration acknowledge message and this message is transmitted to the MSC (2509), thus finishing the processing (2510).

According to the present invention, in a mobile telecommunication system of the multi-layer system, a personal station for carrying out a call connection transmits each information of the type of call, the move speed of the personal station and the estimated time of using the circuit to the selector which is connected to the switching station, a type of cell which is most suitable for the personal station to carry out the circuit connection is selected based on these information in the cell selection table of the cell selector of the personal station, and this type of cell is posted to the personal station so that the personal station can carry out the circuit connection to the radio base station (BS) of the selected type of cell. By having the above arrangement, the quality of telecommunication suitable for each call can be ensured and the concentration of traffics to the radio base station (BS) of a specific type of cell can be avoided. Further, after the cell selection processing, when there is no idle circuit in the radio circuits between the radio base station (BS) of the selected type of cell and the personal station, or when there is no idle circuit in the circuits between the radio base station (BS) and the personal station despite the fact that it becomes necessary to switch the channel during the telecommunication, other type of cell is selected and the channel is switched to the circuit of the radio base station (BS) of the same type of cell. By this arrangement, it becomes possible to reduce the time of inability of telecommunication, an extreme deterioration of the telecommunication quality due to an aggravated wave condition and the rate of occurrence of forced circuit disconnection.

## Claims

1. A mobile telecommunication system for carrying out a service by dividing a mobile telecommunication service area into a plurality of cells, characterized in that
said divided plurality of cells are hierarchically structured by large-cells (141, 1441) consisting of large service areas, middle-cells 31 consisting of service areas smaller than said large-cell (141, 1441) and small-cells 121 consisting of service areas smaller than said middle-cell 131, a radio base station (BS) corresponding to a size of each of said service areas is provided in each of said large-cells (141, 1441), that
said middle-cells 31 and said small-cells 121 and each of said radio base stations (BS) is connected to a mobile switching center (MSC) for carrying out a call switching service, that
a personal station (PS) 100 which can move between said cells is equipped with means for transmitting information of type of call at time of a call control, and that
said mobile telecommunication system includes a cell selector for selecting any one of cells out of said large-cells (141, 1441), said middle-cells 31 and said small-cells 121 as a cell to be utilized for telecommunication between said personal station (PS) 100 and said radio base station (BS) based on information of type of call transmitted from said personal station (PS) 100.

2. A mobile telecommunication system according to Claim 1,
characterized in that said information of type of call to be transmitted by a personal station (PS) 100 consists of a signal which shows that a type of call to be set is any one of voice, image and data.

3. A mobile telecommunication system for carrying out a service by dividing a mobile telecommunication service area into a plurality of cells, characterized in that
said divided plurality of cells are hierarchically structured by large-cells (141, 1441) consisting of large service areas, middle-cells 31 consisting of service areas smaller than said large-cell (141, 1441) and small-cells 121 consisting of service areas smaller than said middle-cell 131, that
a radio base station (BS) is provided in each of said cells and each of said radio base stations is connected to a mobile switching center (MSC) for carrying out a call switching service, that
a personal station (PS) 100 which can move within each of said cells has means for transmitting information of time for using a circuit, and that
said mobile switching center (MSC) includes a cell selector for selecting one of said large-cell (141, 1441), said middle-cell 131 and said small-cell 121 to be utilized for a telecommunication based on circuit using time information posted from said personal station 100.

4. A mobile telecommunication system according to Claim 3, characterized in that
said circuit using time information is information of time for using a circuit to be calculated based on information transmitted from said personal station 100.

5. A mobile telecommunication system for carrying out a service by dividing a mobile telecommunication service area into a plurality of cells, characterized in that
said divided plurality of cells are hierarchically structured by large-cells (141, 1441) consisting of large service areas, middle-cells 31 consisting of service areas smaller than said large-cell (141, 1441) and small-cells 121 consisting of service areas smaller than said middle-cell 131, that
a radio base station (BS) is provided in each of said cells and each of said radio base stations is connected to a mobile switching center (MSC) for carrying out a call switching service, that
a personal station (PS) 100 which can move within each of said cells has means for transmitting information of move speed of said personal station 100 at time of controlling a call, and that
said mobile switching center (MSC) includes a cell selector for selecting one of said large-cell (141, 1441), said middle-cell 131 and said small-cell 121 to be utilized for a telecommunication based on said information of move speed of said personal station 100 posted from said personal station 100.

6. A mobile telecommunication system according to Claim 5, characterized in that
said information of move speed of said personal station 100 is a move speed of said personal station 100 calculated by said personal station 100.

7. A mobile telecommunication system according to Claim 5, characterized in that
said information of move speed of said personal station 100 is information of a plurality of speed zones divided based on a move speed of said personal station 100 calculated by said personal station 100.

8. A mobile telecommunication system for carrying out a service by dividing a mobile telecommunication service area into a plurality of cells, characterized in that
said divided plurality of cells are hierarchically structured by large-cells (141, 1441) consisting of large service areas, middle-cells 31 consisting of service areas smaller than said large-cell (141, 1441) and small-cells 121 consisting of service areas smaller than said middle-cell 131, that
a radio base station (BS) is provided in each of said cells and each of said radio base stations is connected to a mobile switching center (MSC) for carrying out a call switching service, and that
a personal station (PS) 100 which can move within each of said cells has a cell selector for selecting one of said large-cell (141, 1441), said middle-cell 131 and said small-cell 121 to be utilized for a telecommunication.

9. A mobile telecommunication system according to Claim 8, characterized in that
a selection of a cell is carried out based on information of type of call which shows that a type of call to be set up is any one of voice, image and data.

10. A mobile telecommunication system for carrying out a service by dividing a mobile telecommunication service area into a plurality of cells, characterized in that
said divided plurality of cells are hierarchically structured by large-cells (141, 1441) consisting of large service areas, middle-cells 31 consisting of service areas smaller than said large-cell (141, 1441) and small-cells 121 consisting of service areas smaller than said middle-cell 131, that
a radio base station (BS) is provided in each of said cells and each of said radio base stations is connected to a mobile switching center (MSC) for carrying out a call switching service, and that
a personal station (PS) 100 which can move within each of said cells has a cell selector for selecting one of said large-cell (141, 1441), said middle-cell 131 and said small-cell 121 to be utilized for a telecommunication based on information of time for using a circuit.

11. A mobile telecommunication system according to Claim 10, characterized in that
said circuit using time information is information of time for using a circuit to be calculated based on information transmitted from said personal station 100.

12. A mobile telecommunication system for carrying out a service by dividing a mobile telecommunication service area into a plurality of cells, characterized in that
said divided plurality of cells are hierarchically structured by large-cells (141, 1441) consisting of large service areas, middle-cells 31 consisting of service areas smaller than said large-cell (141, 1441) and small-cells 121 consisting of service areas smaller than said middle-cell 131, that
a radio base station (BS) is provided in each of said cells and each of said radio base stations is connected to a mobile switching center (MSC) for carrying out a call switching service, and that
a personal station (PS) 100 which can move within each of said cells has a cell selector for selecting one of said large-cell (141, 1441), said middle-cell 131 and said small-cell 121 to be utilized for a telecommunication based on information of move speed of said personal station 100.

13. A mobile telecommunication system according to Claim 12, characterized in that
said information of move speed of said personal station 100 is a move speed of said personal station 100 calculated by said personal station 100.

14. A mobile telecommunication system according to Claim 12, characterized in that
said information of move speed of said personal station 100 is information of a plurality of speed zones divided based on a move speed of said personal station 100 calculated by said personal station 100.

15. A cell selection table (200, 1506) to be utilized for selecting a cell of a mobile telecommunication system which has a plurality of cells of different sizes in layers, characterized in that
said cell selection table (200, 1506) has at least one of information of type of call, information of move speed of a personal station 100 and information of time for using a circuit as a table parameter, and determines a cell to be utilized by a personal station 100 at a call originating side based on a combination of said table parameters.

16. A mobile telecommunication system for carrying out a service by dividing a mobile telecommunication service area into a plurality of cells, characterized in that
said divided plurality of cells are hierarchically structured by large-cells (141, 1441) consisting of large service areas, middle-cells 31 consisting of service areas smaller than said large-cell (141, 1441) and small-cells 121 consisting of service areas smaller than said middle-cell 131, that
a radio base station (BS) is provided in each of said cells and each of said radio base stations is connected to a mobile switching center (MSC) for carrying out a call switching service, that
a personal station 100 which can move within each of said cells has means for transmitting information of type of call at time of controlling a call, that
said mobile switching center (MSC) includes a cell selector for selecting one of said large-cell (141, 1441), said middle-cell 131 and said small-cell 121 to be utilized by said mobile personal station 100 for a telecommunication, and that
said cell selector includes a cell selection table (200, 1506) which is used at time of said cell selection and includes at least one of information of type of call, information of move speed of a personal station 100 and information of time for using a circuit as a table parameter, for determining a cell to be utilized by a personal station 100 at a call originating side based on a combination of said table parameters.

17. A mobile telecommunication system for carrying out a service by dividing a mobile telecommunication service area into a plurality of cells, characterized in that
said divided plurality of cells are hierarchically structured by large-cells (141, 1441) consisting of large service areas, middle-cells 31 consisting of service areas smaller than said large-cell (141, 1441) and small-cells 121 consisting of service areas smaller than said middle-cell 131, that
a radio base station (BS) is provided in each of said cells and each of said radio base stations is connected to a mobile switching center (MSC) for carrying out a call switching service, that
a personal station 100 which can move within each of said cells has means for transmitting information of type of call at time of controlling a call, that
said mobile switching center (MSC) includes a cell selector for selecting one of said large-cell, said middle-cell 131 and said small-cell 121 to be utilized for a telecommunication based on information of said personal station 100 transmitted from said personal station 100, and that
storage means connected/included in said cell selector, for storing a cell selection table (200, 1506) which has at least one of said information of type of call of said personal station 100, information of move speed of said personal station 100 and information of time for using a circuit, as a table parameter, for corresponding a cell to be utilized by a call originating side personal station 100 from a combination of said table parameters.

18. A method for setting a telecommunication circuit for a mobile telecommunication system which is structured by a mobile telecommunication service area divided into large-cells (141, 1441) consisting of large service areas, middle-cells 31 consisting of service areas smaller than said large-cell (141, 1441) and small-cells 121 consisting of service areas smaller than said middle-cell 131, a radio base station (BS) provided corresponding to each of said cells, and personal stations (PSs) 100 for carrying out telecommunication with said radio base stations (BS), characterized in that
said personal station (PS) 100 builds information of type of call relating to a telecommunication into a telecommunication circuit setting signal and transmits said telecommunication circuit setting signal to said radio base station (BS), that
said base station (BS) which has received said telecommunication circuit setting signal transmits said telecommunication circuit setting signal to a cell selector, that
said cell selector which has received said telecommunication circuit setting signal extracts said information of type of call included in said telecommunication circuit setting signal, selects one of said large-cell (141, 1441), said middle-cell 131 and said small-cell 121 as a cell to be used for a telecommunication by said personal station 100 based on said extracted information of type of call, and transmits said selected cell information to said radio base station, and that
said radio base station (BS) which has received said cell information transmits said cell information to said personal station 100 so that a telecommunication is set.

19. A posting method for posting information of type of call from a personal station 100 to a radio base station (BS), characterized in that
a mobile telecommunication service area is divided into a plurality of cells and said plurality of cells are hierarchically structured by large-cells (141, 1441) consisting of large service areas, middle-cells 31 consisting of service areas smaller than said large-cell (141, 1441) and small-cells 121 consisting of service areas smaller than said middle-cell 131, that
a personal station 100 which can move within each of said cells transmits said information of type of call which becomes a standard for selecting one of said large-cell (141, 1441), said middle-cell 131 and said small-cell 121 as a cell to be utilized for a telecommunication to be carried out between said personal station 100 and said radio base station (BS), that
any one of said radio base stations (BS) provided in each of said cells receives said information of type of call transmitted from said personal station 100, and that
said radio base station (BS) posts said information of type of call transmitted from said personal station 100 to said cell selector.

20. A method of posting information of type of call according to Claim 19, characterized in that
said personal station 100 posts said information of type of call to said radio base station (BS) at time of setting a call.

21. A method of posting information of type of call according to Claim 19, characterized in that
said personal station 100 provides an information storage area for storing information of type of call in information to be posted to said radio base station (BS) at time of setting a call, and stores information of type of call in said information of type of call storage area.

22. A method of posting information of type of call according to Claim 19, characterized in that
said personal station 100 posts said information of type of call to said radio base station (BS) provided in a first cell when carrying out a hand-over from said first cell to a second cell which is located adjacent to said first cell or in a layer relation, during a telecommunication.

23. A posting method for posting information of time for using a circuit from a personal station 100 to a radio base station (BS), characterized in that
a mobile telecommunication service area is divided into a plurality of cells and said plurality of cells are hierarchically structured by large-cells (141, 1441) consisting of large service areas, middle-cells 31 consisting of service areas smaller than said large-cell (141, 1441) and small-cells 121 consisting of service areas smaller than said middle-cell 131, that
a personal station 100 which can move within each of said cells transmits said information of time for using a circuit which becomes a standard for selecting one of said large-cell (141, 1441), said middle-cell 131 and said small-cell 121 as a cell to be utilized for a telecommunication to be carried out between said personal station 100 and said radio base station (BS), that
any one of said radio base stations (BS) provided in each of said cells receives said information of time for using a circuit transmitted from said personal station 100, and that
said radio base station (BS) posts said information of time for using a circuit transmitted from said personal station 100 to said cell selector.

24. A method of posting information of time for using a circuit according to Claim 23, characterized in that
said personal station 100 posts said information of time for using a circuit to said radio base station (BS) at time of setting a call.

25. A method of posting information of time for using a circuit according to Claim 23, characterized in that
said personal station 100 provides an information storage area for storing information of time for using a circuit in information to be posted to said radio base station (BS) at time of setting a call, and stores information of time for using a circuit in said information of time for using a circuit storage area.

26. A method of posting information of time for using a circuit according to Claim 23, characterized in that
said personal station 100 posts said information of time for using a circuit to said radio base station (BS) provided in a first cell when carrying out a hand-over from said first cell to a second cell which is located adjacent to said first cell or in a layer relation, during a telecommunication.

27. A posting method for posting information of move speed of a personal station 100 from a personal station 100 to a radio base station (BS), characterized in that
a mobile telecommunication service area is divided into a plurality of cells and said plurality of cells are hierarchically structured by large-cells (141, 1441) consisting of large service areas, middle-cells 31 consisting of service areas smaller than said large-cell (141, 1441) and small-cells 121 consisting of service areas smaller than said middle-cell 131, that
a personal station 100 which can move within each of said cells transmits said information of move speed of a personal station 100 which becomes a standard for selecting one of said large-cell (141, 1441), said middle-cell 131 and said small-cell 121 as a cell to be utilized for a telecommunication to be carried out between said personal station 100 and said radio base station (BS), that
any one of said radio base stations (BS) provided in each of said cells receives said information of move speed of a personal station 100 transmitted from said personal station, and that
said radio base station (BS) posts said information of move speed of a personal station transmitted from said personal station to said cell selector.

28. A method of posting information of move speed of a personal station according to Claim 27, characterized in that
said personal station posts said information of move speed of a personal station to said radio base station (BS) at time of setting a call.

29. A method of posting information of move speed of a personal station according to Claim 27, characterized in that
said personal station provides an information storage area for storing information of move speed of a personal station in information to be posted to said radio base station (BS) at time of setting a call, and stores information of move speed of a personal station in said information of move speed of a personal station storage area.

30. A method of posting information of move speed of a personal station according to Claim 27, characterized in that
said personal station posts said information of move speed of a personal station to said radio base station (BS) provided in a first cell when carrying out a hand-over from said first cell to a second cell which is located adjacent to said first cell or in a layer relation, during a telecommunication.

31. A data format for posting information of type of call from a personal station to a radio base station (BS), which divides a mobile telecommunication service area into a plurality of cells and structures said plurality of cells in layers of large-cells (141, 1441) consisting of large service areas, middle-cells 31 consisting of service areas smaller than said large-cell (141, 1441) and small-cells 121 consisting of service areas smaller than said middle-cell 131, for forming a standard of selecting one of said large-cell (141, 1441), said middle-cell 131 and said small-cell 121 as a cell to be utilized so that a personal station which can move within each of said cells transmits a signal, any one of said radio base stations provided for said cells receives said signal, and a cell selector connected to said radio base station (BS) utilizes a selected cell for carrying out a telecommunication between said personal station and said radio base station (BS).
